# EUROPEAN PATENT SPECIFICATION

(11) **EP 2 340 972 B1**
(45) Date of publication and mention of the grant of the patent: **14.11.2012**
(21) Application number: 09814522.0
(22) Date of filing: 10.09.2009
(51) Int. Cl.: B60T 8/18, B60T 13/66, B60T 15/18, B60T 15/36, B60T 17/22

(54) **Variable load valve and brake control device**
Lastabhängiges Ventil und Bremssteuerungsvorrichtung
Soupape de charge variable et dispositif de commande de frein

(30) Priority: 22.09.2008 JP 2008243150; 22.09.2008 JP 2008243086; 22.09.2008 JP 2008243087; 25.11.2008 JP 2008299349
(43) Date of publication of application: 06.07.2011
(73) Proprietor: Nabtesco Corporation, Tokyo 105-0022 (JP)
(72) Inventor: YAMANAKA, Masatami, Kobe-shi Hyogo 651-2271 (JP); KAJIWARA, Fumihiro, Kobe-shi Hyogo 651-2271 (JP)
(74) Representative: Müller-Boré & Partner Patentanwälte
(86) International application number: PCT/JP2009/065844
(87) International publication number: WO 2010/032677

(56) References cited:
- WO-A2-02/22421
- DE-B3-102008 012 700
- JP-A- 2003 063 366
- JP-U- 4 035 061
- JP-U- 4 043 562

## Description

### TECHNICAL FIELD

The present invention relates to a variable load valve and a brake control device for a railroad car.

### BACKGROUND ART

DE 10 2008 012 700 B3 discloses a brake unit with an electro-pneumatic brake pressure regulator for delivering a fluid with pre-regulation pressure to a solenoid valve connected down stream according to the weight of a vehicle. A pre-pressure storage facility is filled up with the fluid of the pre-regulation pressure that acts on a pneumatic brake cylinder. The brake pressure regulator regulates and/or controls emergency brake pre-control pressure in an additional emergency brake pressure storage facility to control the solenoid valve when an emergency brake is applied.

Heretofore, there has been known a railroad car brake control device designed to generate a pilot pressure by controlling a charging solenoid valve and a discharging solenoid valve based on an air spring pressure acquired by a pressure sensor, and output a brake pressure depending on the pilot pressure (see Patent Documents 1 and 2).

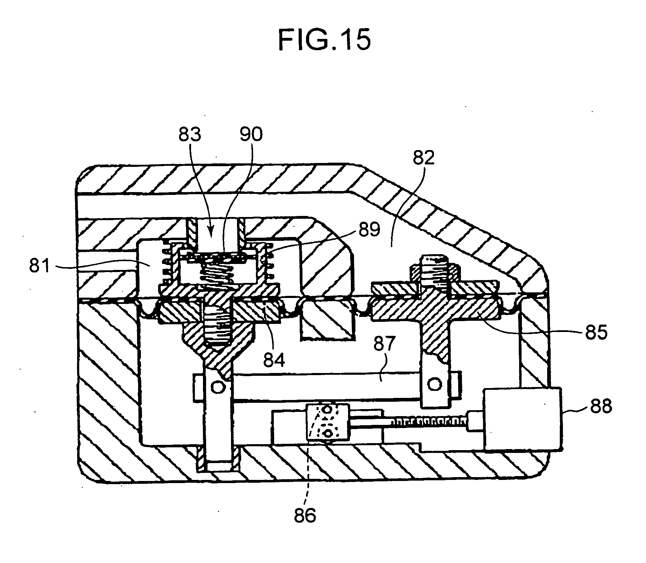

A brake control device disclosed in Patent Document 2 is provided with a pressure limiting valve (variable load valve) for keeping a pressure (air source pressure) from being excessively applied even during a power failure, so as to allow a brake cylinder pressure to be set to a value according to a car load condition. Specifically, as shown in FIG. 15, the pressure limiting valve comprises a first chamber 81 having an inlet port, a second chamber 82 having an outlet port, a valve assembly 83 adapted to open and close a passage between the first chamber 81 and the second chamber 82, a first diaphragm piston 84 adapted to be displaced by compressed air flowing from the inlet port into the first chamber 81, a second diaphragm piston 85 installed inside the second chamber 82, a balancing beam 87 connecting the two pistons 84, 85 while being supported by a fulcrum member 86, and a stepping motor 88 adapted to move the fulcrum member 86. The valve assembly 83 has a valve element 90 housed in a cartridge 89 of the first diaphragm 84. In this brake control device, based on moving the fulcrum member 86, a stroke ratio between the first diaphragm piston 84 and the second diaphragm piston 85 can be adjusted according to a ratio between a pressure in the first chamber 81 and a pressure in the second chamber 82, and thereby pressure setting can be changed. Further, in this brake control device, a proportional pressure appearing in the outlet port can be maintained constant, irrespective of a pressure occurring in the inlet port during a power failure.

The brake control device disclosed in Patent Document 2 has a structure which allows the pressure setting to be changed according to a fulcrum position of the balancing beam 87, so that it becomes possible to maintain a pressure depending on a car load condition, even during a power failure. However, this structure requires the balancing beam 87 and the stepping motor 88, and therefore has limitations on downsizing the brake control device.

### PRIOR ART DOCUMENTS

### PATENT DOCUMENTS

Patent Document 1:JP-U 4-043562A
Patent Document 2: JP 8-295236A

### SUMMARY OF THE INVENTION

It is an object of the present invention to provide a variable load valve capable of facilitating downsizing while ensuring a fail-safe function.

According to one aspect of the present invention, there is provided a variable load valve which is capable of outputting a load compensating pressure according to a detection value from a sensor operable to detect a pressure of an air spring of a car. The variable load valve comprises: a pressure regulating valve for limiting a pressure supplied from an air source to a pressure corresponding to a full-load-condition load compensating pressure, and output the resulting pressure; a pilot pressure sensor for detecting the pressure outputting from the pressure regulating valve; a solenoid valve capable of charging/discharging air pressure, and operable, in accordance with a detection value from the pilot pressure sensor, to adjust the pressure output from the pressure regulating valve, by means of the charging/discharging, and output the resulting pressure; and an output valve adapted to receive an input of the pressure output from the solenoid valve, as a pilot pressure, wherein the output valve has an empty-condition assuring spring for generating an empty-condition load compensating pressure. The output valve is operable to output a pressure obtained by adding the pilot pressure and the empty-condition load compensating pressure based on a biasing force of the empty-condition assuring spring, as the load compensating pressure.

### BRIEF DESCRIPTION OF THE DRAWINGS

FIG. 1 is a sectional front view showing a brake control device according to a first embodiment of the present invention.
FIG. 2 is a partially broken-out right side view showing the brake control device.
FIGS. 3A and 3B show a mounting seat.
FIGS. 4A and 4B show a hinge member.
FIG. 5 is a partially broken-out left side view showing the brake control device.
FIG. 6 shows a control board and a cover, when viewing a lid member of a casing from a back side thereof.
FIG. 7 is a circuit diagram showing a compressed air circuit of the brake control device.
FIG. 8 is a circuit diagram showing a load-compensating-pressure generating section of the compressed air circuit.
FIG. 9 is a sectional top view of a variable load valve.
FIG. 10 is a circuit diagram showing a brake-pressure generating section of the compressed air circuit.
FIG. 11 is a sectional right side view of a relay valve.
FIG. 12 is a sectional rear view of a supply cut-off valve and a discharge valve, taken along the line XII-XII in FIG. 11.
FIG. 13 is a block diagram illustrating a control operation of a brake control device according to a second embodiment of the present invention.
FIG. 14 is a flowchart illustrating the control operation of the brake control device in FIG. 13.
FIG. 15 is a sectional view of a conventional brake control device.

### DESCRIPTION OF EMBODIMENTS

With reference to the drawings, the present invention will now be described based on an embodiment thereof.

### (FIRST EMBODIMENT)

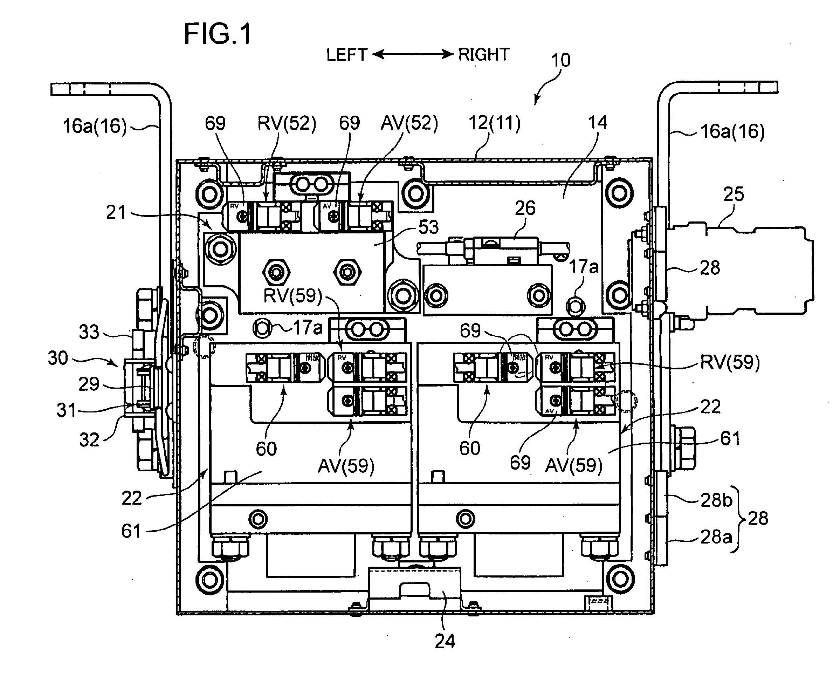

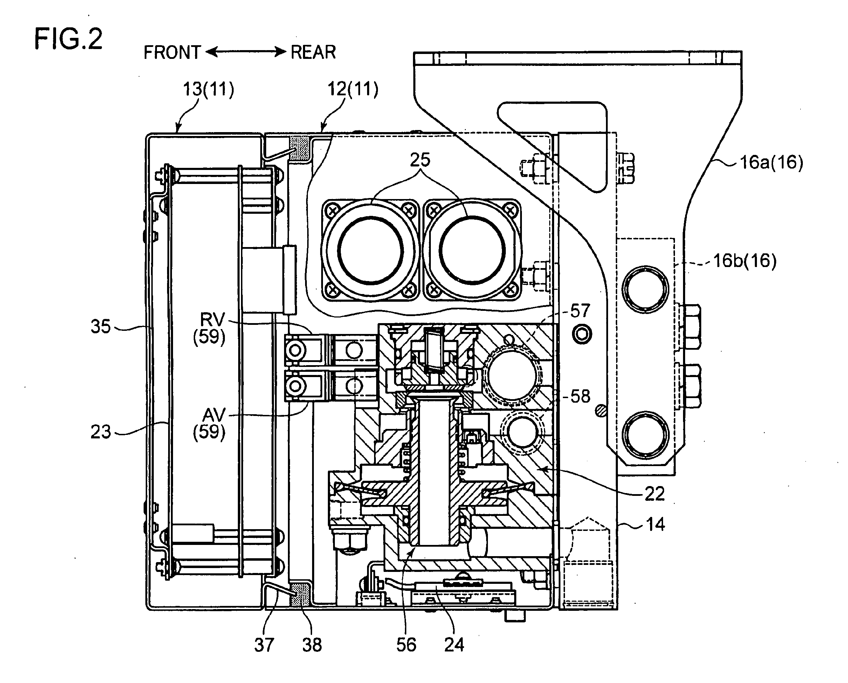

As shown in FIGS. 1 and 2, a brake control device 10 according to a first embodiment is equipped with a casing 11 formed in a rectangular box-like shape, wherein an inside of the casing 11 is defined as a receiving space capable of housing an after-mentioned variable load valve 21, after-mentioned relay valves 22, 22, an after-mentioned control board 23 and others. The casing 11 comprises a casing body 12 formed with an opening on the side of a front surface thereof, and a lid member 13 capable of unclosing and closing the opening of the casing body 12.

A rear surface (back surface), i.e., one of six side surface, of the casing body 12, is defined by a pipe seat 14, and the front surface (one of the remaining side surfaces) on an opposite side of the rear surface provided with the pipe seat 14 is formed as the above opening. The pipe seat 14 is a flat member which is internally formed with an air passage for connecting a pipe line of a source pressure to be introduced from outside the casing 11, etc., and the variable load valve 21, the relay valves 22, 22 and others provided inside the casing 11.

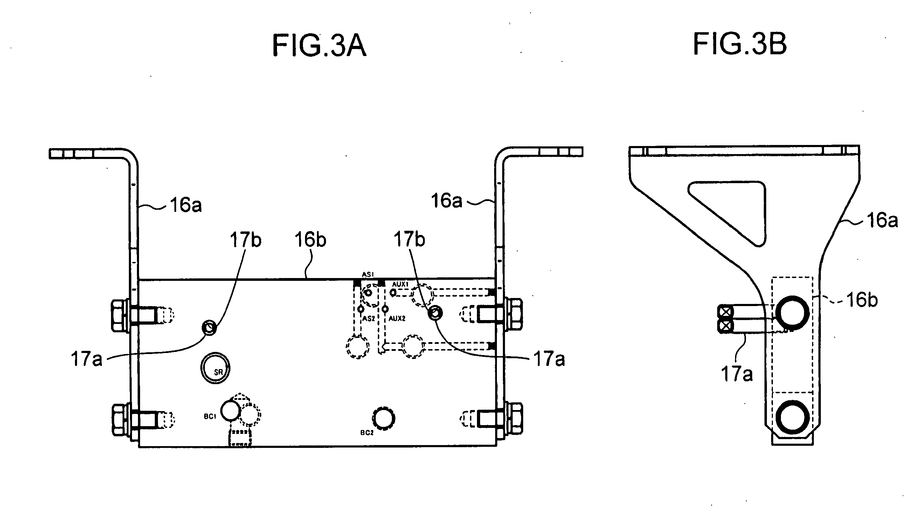

The casing 11 is provided with a mounting seat 16 attachable to a truck of a car (illustration is omitted). As shown in FIGS. 3A and 3B, the mounting seat 16 is provided across right and left sides of the casing 11, wherein the mounting seat 16 includes a pair of hanging members 16a, 16a each adapted to be coupled to the truck, and a seat member 16b disposed between the hanging members 16a, 16a. An upper end of each of the hanging members 16a, 16a is elongated in a frontward-rearward direction, in such a manner that the hanging member 16a has a shape protruding frontwardly from a fixing position of the seat member 16b. This makes it possible to stably hold the casing 11 even if the mounting seat 16 is fixed on the side of the rear surface of the casing 11. The seat member 16b is formed in a horizontally-long rectangular parallelepiped shape, and superimposed on the side of a rear surface of the pipe seat 14.

In this specification, the term "front side" means a side toward which the opening of the casing body 12 faces, i.e., a side toward which an operator faces during maintenance, and the term "rear side" means a side opposite to the front side, i.e., one side of the casing body 12 on the side of the pipe seat 14. Thus, the terms "front side" and "rear side" have no relation to a frontward-rearward direction of a car. Further, the terms "right" and "left" mean right and left, respectively, when viewed from the front side.

The seat member 16b has a first engagement portion 17a which is a protruded convex portion. In the first embodiment, the first engagement portion 17a is provided as a pair of first engagement portions. The first engagement portion 17a is fixed to the seat member 16b to extend from the seat member 16b toward the front surface in a horizontal direction, in such a manner that it has a protruding length equal to or greater than a thickness of the pipe seat 14 in the frontward-rearward direction.

The pipe seat 14 has a second engagement portion 17b engageable with the first engagement portion 17a. The second engagement portion 17b is comprised of a through-hole adapted to allow the first engagement portion 17a to be inserted thereinto. In a state after the first engagement portion 17a is inserted into the second engagement portion 17b, it penetrates through the pipe seat 14, and a distal end of the first engagement portion 17a protrudes from a front surface of the pipe seat 14 (see FIG. 1). In this state, the first engagement portion 17a and the second engagement portion 17b are engaged with each other, so that the pipe seat 14 is held while being supported by the mounting seat 16. Thus, in an operation of attaching the brake control device 10 to a truck of a car, the mounting seat 16 is fixed to the truck, and then the casing 11 is temporarily held by the mounting seat 16, in such a manner that the first engagement portion 17a of the mounting seat 16 is inserted into the second engagement portion 17b which is the through-hole formed in the pipe tube 14 of the casing 11. Subsequently, after performing a sub-operation of fastening the casing 11 to the mounting seat 16 in this state, a sub-operation of attaching components and others can be performed. Thus, the operation of attaching the brake control device 10 to the truck can be performed by one operator. A non-illustrated packing is provided at a base end of the first engagement portion 17a. This makes it possible to maintain air-tightness in the fixed state of the brake control device 10. An operation of detaching the brake control device 10 from the truck can be performed according to a procedure opposite to that of the aforementioned operation.

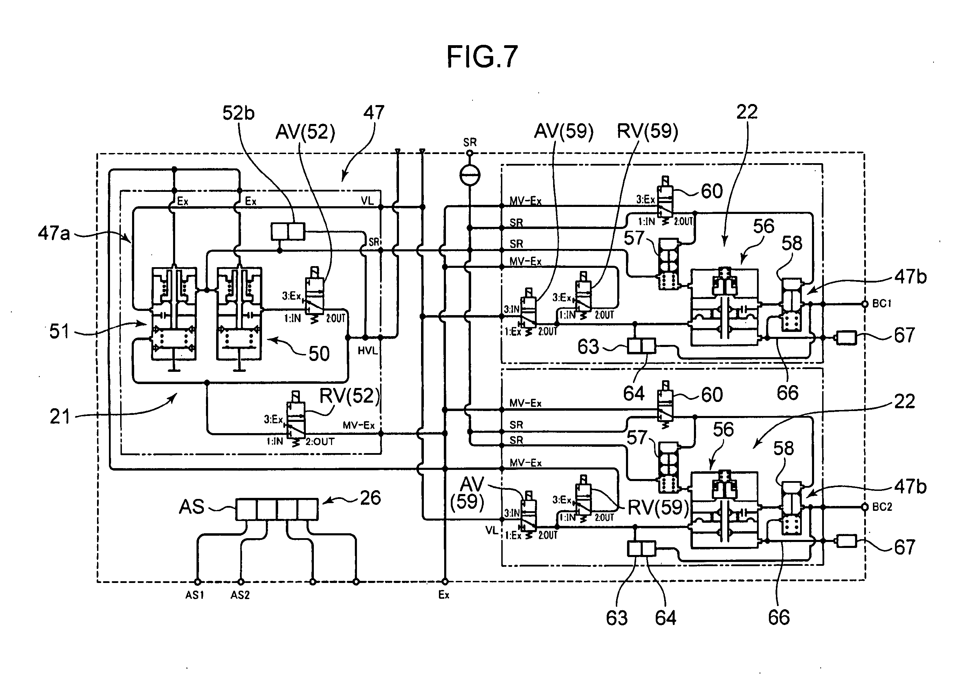

As shown in FIG. 1, at least a variable load valve 21 and a relay valve 22 are installed in the housing space of the casing 11. The relay valve 22 is provided as a pair of relay valves which are arranged side-by-side in a horizontal direction. When viewed from the side of the front surface, the variable load valve 21 is installed just above the left relay valve 22, and, in the first embodiment, a space equivalent to a size of the variable load valve 21 is defined just above the right relay valve 22. This space (space on a right side of the variable load valve 21 when viewed from the side of the front surface) serve as a receiving section for an electric line led into the casing 11. The electric line is introduced into the casing 11 via a lead-in member 25 provided on a right sidewall of the casing body 12 when viewed from the side of the front surface. A pressure sensor unit 26 is also installed in the right space. The pressure sensor unit 26 includes a pressure sensor AS (see FIG. 7) operable to detect a pressure in an air spring (illustration is omitted) to be applied with a car load. Further, a heater 24 is provided just below the relay valves 22, 22.

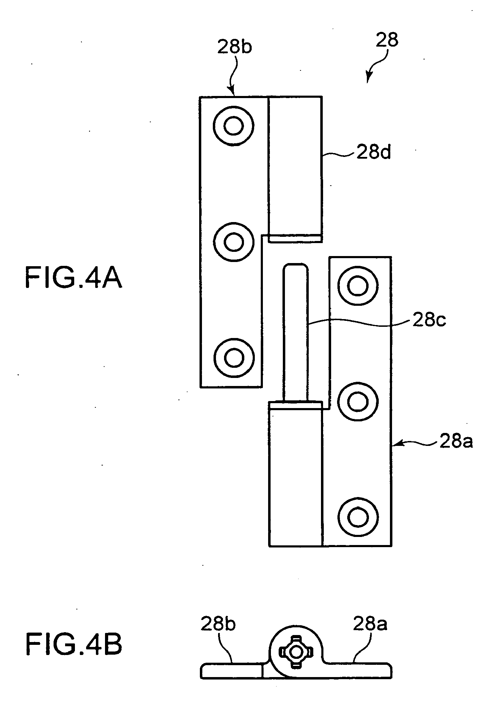

The lid member 13 of the casing 11 is formed as a hinged door. Specifically, the lid member 13 is coupled to the casing body 12 through a hinge member 28 illustrated in FIGS. 4A and 4B, and adapted to be swingable about the hinge member 28 serving as a swing axis. The hinge member 28 is provided on the right side of the casing 11 when viewed from the side of the front surface. Thus, the lead-in member 25 is provided on the sidewall of the casing body 12 on the side of the hinge member 28, to face the electric line-receiving section. Thus, the electric line is less likely to come under a negative influence, for example, come into a situation where it is pulled during opening/closing of the lid member 13. It is understood that a structure may be employed in which the hinge member 28 and the lead-in member 25 are provided on the left side of the casing 11, and the variable load valve 21 is installed just above the right relay valve 22.

As shown in FIGS. 4A and 4B, the hinge member 28 has a body-side portion 28a coupled to the casing body 12, and a lid-side portion 28b coupled to the lid member 13. The lid-side member 28b is adapted to be swingable with respect to the body-side portion 28a, and separable from the body-side portion 28a. Specifically, the body-side portion 28a is provided with a pin-shaped pivot shaft segment 28c, and the lid-side portion 28b is provided with a tubular segment 28d which is adapted to allow the pivot shaft portion 28c to be inserted thereinto. The tubular segment 28d of the lid-side portion 28b is placed on an upper region of the body-side portion 28a while being fitted on the pivot shaft segment 28c. In this state, the lid-side portion 28b becomes swingable with respect to the body-side portion 28a. Further, the lid-side portion 28b can be separated from the body-side portion 28a by moving the lid-side portion 28b upwardly. Thus, the lid member 13 is adapted to be readily separable from the casing body 12 when it is opened. In place of this structure, a structure may be employed in which the lid-side portion 28b is provided with the pivot shaft segment 28c, and the body-side portion 28a is provided with the tubular segment 28d.

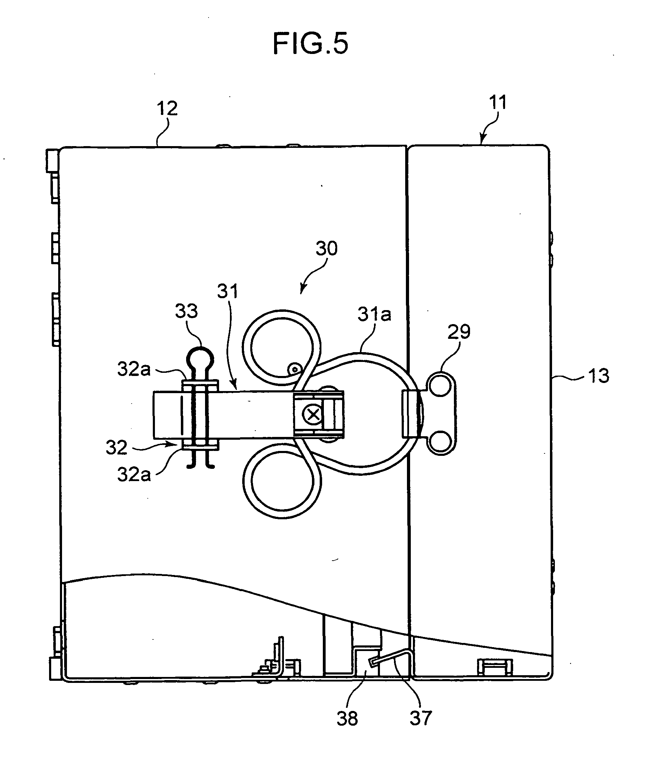

As shown in FIG. 5, the lid member 13 is provided with a catch 29 in a region on an opposite side of the hinge member 28. The catch 29 is designed to allow a hook portion 31a of a lock mechanism 30 provided on the casing body 12 to be fastened thereto. The lock mechanism 30 comprises: a lever-shaped movable member 31 having the hook portion 31a; a fixed member 32 provided with a pair of insertion portions 32a, 32a on respective ones of upper and lower sides of the movable member 31, and fixed to the casing body 12; and a lock member 33 adapted to be inserted into the pair of insertion portions 32a, 32a so as to press the movable member 31. The movable member 31 is comprised of a snap lock, and can assume two positions which consist of an engaged position where the hook portion 31a is engaged with the catch 29, and an unlocked position where the hook portion 31a is disengaged from the catch 29. The lock member 33 is inserted into the pair of insertion portions 32a, 32a when the movable member 31 is in the engagement position. The lock member 33 is formed by bending a wire rod into a U shape, and elastically bendable when being pressed from opposite sides. The lock member 33 is inserted into the insertion portion 32, in a bended state, and subsequently placed in a state where it is engaged with the insertion portions 32a, 32a by its own elastic force. In the state after the lock member 33 is inserted into the insertion portions 32a, 32a, the movable member 31 is pressed by the lock member 33, so that the movable member 31 is reliably maintained in the engaged position. This makes it possible to prevent an unintentional opening movement of the lid member 13.

As shown in FIG. 2, the lid member 13 has a front surface portion, an upper surface portion, a lower surface portion, and right and left side surface portions, and has a given depth in the frontward-rearward direction. Further, respective rear ends of the upper surface portion, the lower surface portion and the right and left side surface portions are bent inwardly, and a rear surface portion of the lid member 13 is formed by the bended rear ends. The rear surface portion of the lid member 13 defines an peripheral edge of a large opening.

A mounting bracket 35 is fixed to a back surface of the front surface portion of the lid member 13, and a control board 23 is attached to the mounting bracket 35. This means that the control board 23 is installed in a back of the lid member 13. In other words, the control board 23 is located on a side opposite to the pipe seat 14 with respect to the variable load valve 21 and the relay valves 22, 22. The control board 23 is located in front (on a front side) of the relay valves 22, 22 and the variable load valve 21. However, when the lid member 13 is openingly moved, the control board 23 is also moved together with the lid member 13, so that the variable load valve 21 and the relay valves 22, 22 will be exposed along with the opening movement of the lid member 13. The control board 23 is an electronic circuit board capable of controlling respective solenoid valves of the variable load valve 21 and the relay valves 22, 22, etc.

The lid member 13 is provided with a water-intrusion preventing member 37. The water-intrusion preventing member 37 is provided in an opening edge region of the rear surface portion of the lid member 13. The water-intrusion preventing member 37 is formed on the entire circumference of the opening by bending the opening edge region outwardly into an inclined shape. In an upper area of the water-intrusion preventing member 37, it is formed to extend obliquely upwardly in the rearward direction. Thus, water droplets intruding between the casing body 12 and the lid member 13 will run down along right and left portions of the water-intrusion preventing member 37. In other words, the water-intrusion preventing member 37 can prevent water from intruding into the casing body 12 through between the casing body 12 and the lid member 13. A rear end of the water-intrusion preventing member 37 is brought into contact with a packing 38 provided along an peritoneal edge of the opening of the casing body 12.

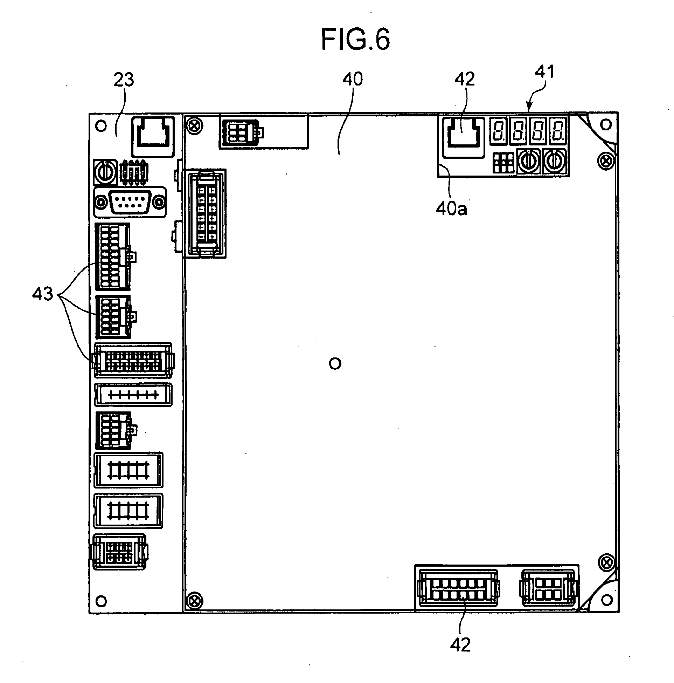

As shown in FIG. 6, the lid member 13 has a cover 40 made of aluminum or an aluminum alloy and provided on the side of the casing body 12 with respect to the control board 23. This cover 40 is designed to prevent the control board 23 from being damaged by a tool or the like when the lid member 13 is opened to perform a work operation, such as a maintenance task. While the cover 40 covers a large portion of the control board 23, it has a cutout 48a formed in an appropriate position. A required portion of the control board 23 can be visually checked through the cutout 40a. For example, an indicator 41, such as an LED (light-emitting diode) or an LCD (liquid-crystal display), capable of indicating respective control states of the variable load valve 21 and the relay valves 22, 22, are attached to the above portion of the control board 23. Thus, the indicator 41 becomes visible when the opening of the casing body 12 is unclosed by means of the lid member 13. The cutout 40a is also formed in a position corresponding to a portion provided with a connector terminal 42. The cover 40 may be formed of a punched metal to ensure a heat dissipation capability. Further, in addition to the indicator 41 of the control board 23, an indicator (illustration is omitted) for an after-mentioned solenoid valve may be provided. In this case, the maintenance task can be performed while checking respective control states of the control board 23 and the solenoid valve by the two indicators 41.

The control board 23 is provided with a connector 43 adapted to allow a signal line connected to a solenoid valve of the variable load valve 21 or the relay valves 22, 22, or a sensor, to be detachably attached to the control board 23. Thus, when the lid member 13 is detached from the casing body 12, the signal line can be separated from the control board 23 to allow only the lid member 13 to be moved to another location, which is convenient when performing a maintenance task for an electric system including the control board 23. The connector 43 is provided mainly on the side of the hinge member 28 of the casing 11.

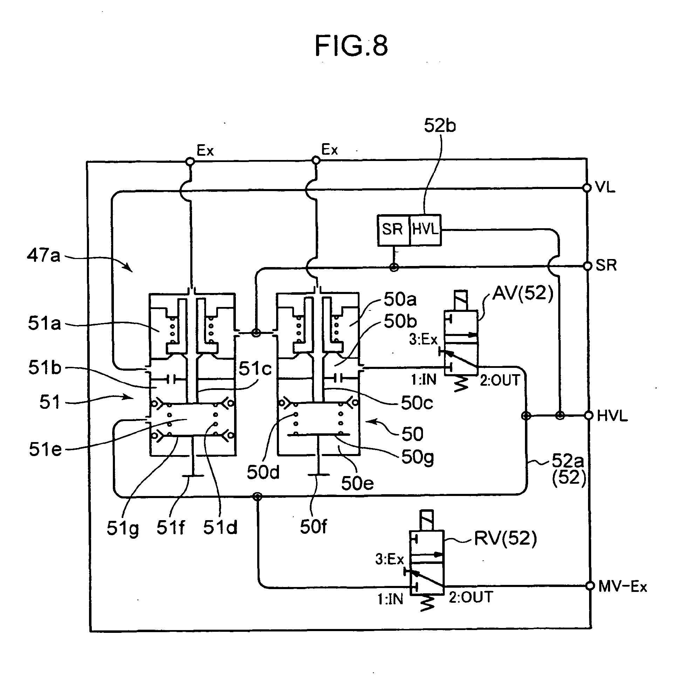

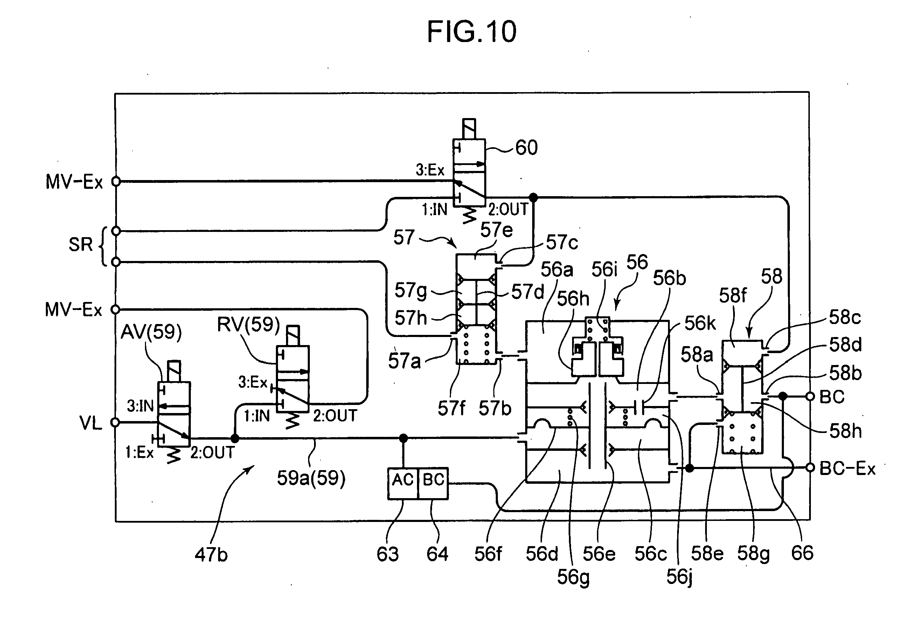

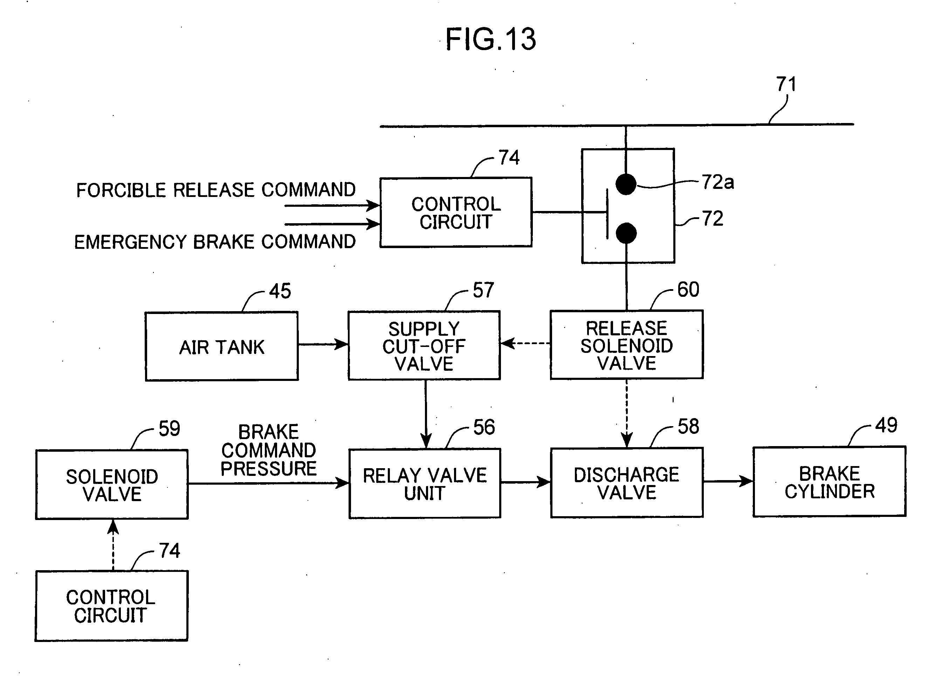

With reference to FIG. 7, the following description will be made about a pressure control system of the brake control device 10 according to the first embodiment. FIG. 7 shows a compressed air circuit 47 provided in the brake control device 10. The compressed air circuit 47 is an air circuit for adjusting an air pressure obtained from an air tank 45 (see FIG. 13) which is an air source as a supply source of compressed air and applying a resulting air pressure to a brake cylinder 49 (see FIG. 13), wherein it comprises a load-compensating-pressure generating section 47a (see FIG. 8) for generating a load compensating pressure VL, and a brake-pressure generating section 47b (see FIG. 10) for generating a brake pressure BC based on the load compensating pressure VL.

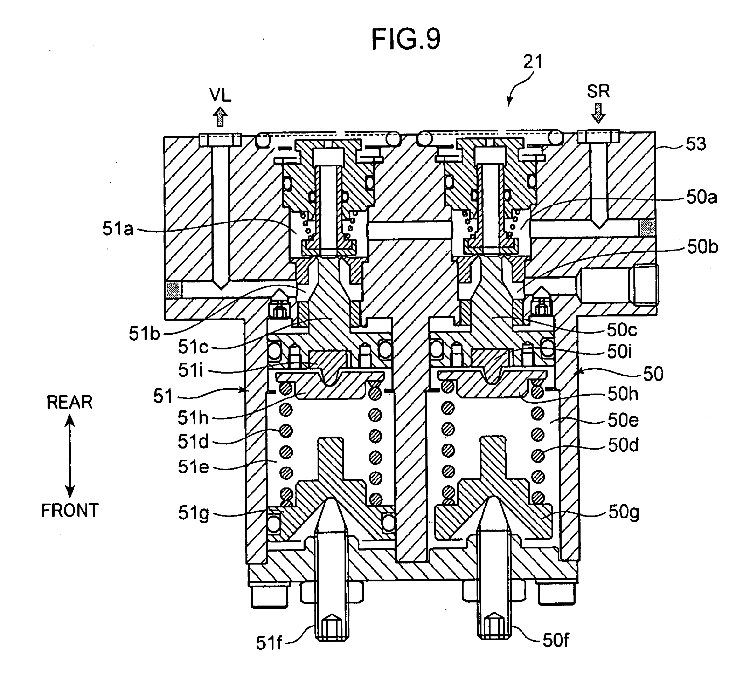

The load-compensating-pressure generating section 47a constitutes the variable load valve 21. The variable load valve 21 comprises a pressure regulating valve 50, an output valve 51 and a solenoid valve 52. As shown in FIG. 9, the pressure regulating valve 50, the output valve 51 and a line for allowing them to be communicated with each other, are integrally provided in a variable-load-valve block 53.

The pressure regulating valve 50 is a valve for limiting a source pressure SR supplied from the air source to a pressure corresponding to a full-load-condition load compensating pressure. The full-load-condition load compensating pressure means a pressure corresponding to a pressure to be applied to the brake cylinder 49 when effecting an emergency brake under a condition that a car is fully packed.

The pressure regulating valve 50 includes: an input chamber 50a having an input port; an output chamber 50b having an output port; a piston 50c; a pressure regulating chamber 50e having a full-load-condition assuring spring 50d for limiting to a pressure corresponding to the full-load-condition load compensating pressure; and a full-load-condition-pressure adjusting screw 50f for adjusting a biasing force of the full-load-condition assuring spring 50d. The input chamber 50a is adapted to receive an input of the source pressure SR via the input port.

The piston 50c is operable, according to a pressure difference between a pressing force of the full-load-condition assuring spring 50d and an air pressure in the output chamber 50b, to adjust an opening amount of an aperture formed in a partition wall between the input chamber 50a and the output chamber 50b, and, when the pressure difference is eliminated, to close the aperture. When the aperture is opened, compressed air in the input chamber 50a flows into the output chamber 50b. A pressure in the output chamber 50b is adjusted to a pressure corresponding to the full-load-condition load compensating pressure, and the resulting pressure is output via the output port.

The full-load-condition-pressure adjusting screw 50f is disposed on the side of a front surface of the variable load valve 21, to penetrate through a front wall of the block 53. The full-load-condition-pressure adjusting screw 50f has an inner end formed in a conical shape, wherein the inner end is located inside the pressure regulating chamber 50e to press one end of the full-load-condition assuring spring 50d through a pressing member 50g.

A portion of the pressing member 50g in contact with the full-load-condition-pressure adjusting screw 50f is formed as a conical-shaped concave portion. Further, a pressing member 50h is provided on the other end of the full-load-condition assuring spring 50d, and a conical-shaped concave portion is provided in a surface of the pressing member 50h on a side opposite to the full-load-condition assuring spring 50d. Correspondingly, a receiving member 50i having a distal end formed in a conical shape is attached to the piston 50c. The distal end of the receiving member 50i is in contact with the concave portion of the pressing member 50h, and a slight gap exists between the piston 50c and the pressing member 50h. Thus, the pressing member 50h can be swingably moved about the distal end of the receiving member 50i.

Based on the above structure of the pressure regulating valve 50, even if the biasing force of the spring 50d is decentered with respect to the piston 50c, a force in a direction causing an inclination of the piston 50c is not applied to the piston 50c. This makes it possible to extend a usable life of a seal, etc. In addition, it eliminates a risk that the full-load-condition assuring spring 50d is displaced during a manual operation of the full-load-condition-pressure adjusting screw 50f.

The pressure corresponding to the full-load-condition load compensating pressure can be adjusted by adjusting a screwing amount of the adjusting screw 50f. Basically, this adjustment is performed not only during production of cars but also after replacement and disassembly/maintenance of the variable load valve 21.

The solenoid valve 52 includes a charging unit AV, a discharging unit RV and a connection line 52a, wherein it is operable to adjust a pressure output from the pressure regulating valve 50, according to a current load of a car which carries passengers. Each of the charging unit AV and the discharging unit RV of the solenoid valve 52 is attached to the variable-load-valve block 53 from the side of a front surface thereof (see FIG. 1). The charging unit AV is comprised of a 2-position/3-port changeover valve, wherein it has an inlet port IN communicated with the output port of the pressure regulating valve 50, an outlet port OUT to which the connection line 52a is connected, and a discharge port EX. The discharging unit RV is comprised of a 2-position/3-port changeover valve, wherein it has an inlet port IN communicated with the connection line 52a, an outlet port OUT, and a discharge port EX. The solenoid valve 52 is operable, based on a control signal, to control respective valve positions of the charging unit AV and the discharging unit RV to adjust the pressure output from the pressure regulating valve 50. A pressure HVL adjusted by the solenoid valve 52 is input into the output valve 51 as a pilot pressure. The control signal is a signal which is transmitted to the solenoid valve 52 from a control circuit comprised of a microcomputer circuit and mounted on the control board 23, wherein it is output to allow the load compensating pressure VL to be generated according to a signal from the pressure sensor AS operable to detect a pressure in the air spring (illustration is omitted) to be applied with a car load and according to the pilot pressure sensor 52b provided in the connection line 52a.

Each of the charging unit AV and the discharging unit RV is set to a mode illustrated in FIG. 8, in a non-energized state. Specifically, in this mode, a line between the pressure regulating valve 50 and the output valve 51 is cut off, and the inlet port IN of the discharging unit RV is closed. Thus, even when the control signal cannot be input into the solenoid valve in the event of an electrical failure such as power failure, the pressure HVL which has been set just before the electrical failure is maintained, so that a pressure in a pressure regulating chamber 51e of the output valve 51 is ensured.

The output valve 51 is operable to adjust the source pressure SR to the load compensating pressure VL depending on a current load of a car which carries passengers, by using, as a pilot pressure, the pressure HVL adjusted by the solenoid valve 52, and output the load compensating pressure VL from the variable load valve 21. The output valve 51 includes: an input chamber 51a having an input port adapted to receive an input of the source pressure SR; an output chamber 51b having an output port; a piston 51c; and a pressure regulating chamber 51e having a pressure regulating port. The pressure regulating port is adapted to receive an input of the pressure HVL as a pilot pressure. An empty-condition assuring spring 51d is installed in the pressure regulating chamber 51e to generate an empty-condition load compensating pressure. The empty-condition load compensating pressure means a pressure corresponding to a pressure to be applied to the brake cylinder 49 when effecting an emergency brake function under a condition that a car is empty.

The output valve 51 is provided with the empty-condition assuring spring 51d for generating a pressure corresponding to the empty-condition load compensating pressure, so that, even if the pilot pressure is vanished due to failure or the like, at least the pressure corresponding to the empty-condition load compensating pressure will be ensured by the empty-condition assuring spring 51d. Specifically, even if a situation occurs in which no air pressure is supplied from the pressure regulating valve 50, an aperture between the input chamber 51a and the output chamber 51b can be opened by a biasing force of the empty-condition assuring spring 51d, so that an inside of the output chamber 51b is maintained at a pressure corresponding to a pressure based on the biasing force of the empty-condition assuring spring 51d.

The piston 51c is operable, according to a pressure difference between a total pressure of the biasing force-based pressure of the empty-condition assuring spring 51d and an air pressure in the pressure regulating chamber 51e, and an air pressure in the output chamber 51b, to adjust an opening amount of an aperture formed in a partition wall between the input chamber 51a and the output chamber 51b. The piston 51c is operable, when the pressure difference is eliminated, to close the aperture. When the aperture is opened, compressed air in the input chamber 51a flows into the output chamber 51b, so that a pressure in the output chamber 51b is adjusted to the load compensating pressure VL.

The output valve 51 is provided with an empty-condition-pressure adjusting screw 51f for adjusting the biasing force-based pressure of the empty-condition assuring spring 51d. The empty-condition-pressure adjusting screw 51f is disposed on the side of the front surface of the variable load valve 21, to penetrate through the front wall of the block 53. The empty-condition-pressure adjusting screw 51f has an inner end which is located inside the pressure regulating chamber 51e to press one end of the empty-condition assuring spring 51d through a pressing member 51g.

A portion of the pressing member 51g in contact with the empty-condition-pressure adjusting screw 51f is formed as a conical-shaped concave portion. Further, a pressing member 51h is provided on the other end of the empty-condition assuring spring 51d, and a conical-shaped concave portion is provided in a surface of the pressing member 51h on a side opposite to the empty-condition assuring spring 51d. Correspondingly, a receiving member 51i having a distal end formed in a conical shape is attached to the piston 51c. The distal end of the receiving member 51i is in contact with the concave portion of the pressing member 51h, and a slight gap exists between the piston 51c and the pressing member 51h. Thus, the pressing member 51h can be swingably moved about the distal end of the receiving member 51i.

Based on the above structure of the output valve 51, even if the biasing force of the spring 51d is decentered with respect to the piston 51c, a force in a direction causing an inclination of the piston 51 is not applied to the piston 51. This makes it possible to extend a usable life of a seal, etc. In addition, it eliminates a risk that the empty-condition assuring spring 51d is displaced during a manual operation of the empty-condition-pressure adjusting screw 51f. The pressing member 51 is provided with a seal, so that air-tightness in the pressure regulating chamber 51e is ensured.

The pressure corresponding to the empty-condition load compensating pressure can be adjusted by adjusting a screwing amount of the adjusting screw 51f. Basically, this adjustment is performed not only during production of cars but also after replacement and disassembly/maintenance of the variable load valve 21.

Returning to FIG. 7.

The brake-pressure generating section 47b constitutes the relay valve 22. In the first embodiment, the relay valve 22 are provided as a pair of relay valves, and thereby the brake-pressure generating section is also formed as a pair of brake-pressure generating sections. The relay valve 22 comprises a relay valve unit 56, a supply cut-off valve 57, a discharge valve 58, a solenoid valve 59, and a release solenoid valve 60.

As shown in FIG. 10, the solenoid valve 59 includes a charging unit AV, an discharging unit RV and a connection line 59a. Each of the charging unit AV and the discharging unit RV is attached to a relay-valve block 61 from the side of a front surface thereof (see FIG. 1). The charging unit AV is comprised of a 2-position/3-port changeover valve, wherein it has an inlet port IN adapted to receive an input of the load compensating pressure VL, an outlet port OUT to which the connection line 59a is connected, and a discharge port EX. The discharging unit RV is comprised of a 2-position/3-port changeover valve, wherein it has an inlet port IN communicated with the connection line 59a, the outlet port OUT, and a discharge port EX.

The solenoid valve 59 is adapted to receive an input of a signal output from the control circuit comprised of a microcomputer circuit and mounted on the control board 23. The control signal is generated in accordance with a signal based on a normal brake command to be sent from a car-side unit to the brake control device 10, a signal based on a detection value from a pilot pressure sensor 63 provided in the connection line 59a, a signal based on a detection value from an after-mentioned brake pressure sensor 64, and a signal based on a calculation result from a wheel-skid detection section (not shown) of the control circuit. The wheel-skid detection section is designed to detect wheel skid, based on a car speed, a wheel speed, etc., obtained from a non-illustrated higher-level system.

The control circuit is operable, in response to receiving the normal brake command, to set a brake pressure BC to be output from the relay valve unit 56, according to the received normal brake command, and transmit a control signal corresponding the brake pressure BC, to the solenoid valve 59. Then, the solenoid valve 59 is operable to adjust respective valve positions of the charging unit AV and the discharging unit RV, based on the control signal, to adjust the load compensating pressure VL output from the variable load valve 21, and input the adjusted pressure into the relay valve unit 56 via the connection line 59a. The controller is also operable, according to a detection value from the pilot pressure sensor 63 and a detection value from the brake pressure sensor 64, to adjust the valve positions of the charging unit AV and the discharging unit RV.

Further, the control circuit is operable, according to the calculation result from the wheel-skid detection section, to correct a value of the brake pressure BC to be output from the relay valve unit 56. During this operation, the control circuit is operable to reduce a value of the brake pressure BC until the calculation result from the wheel-skid detection section becomes indicative of no wheel skid. In this case, a value of the brake pressure BC may be reduced in a stepwise manner.

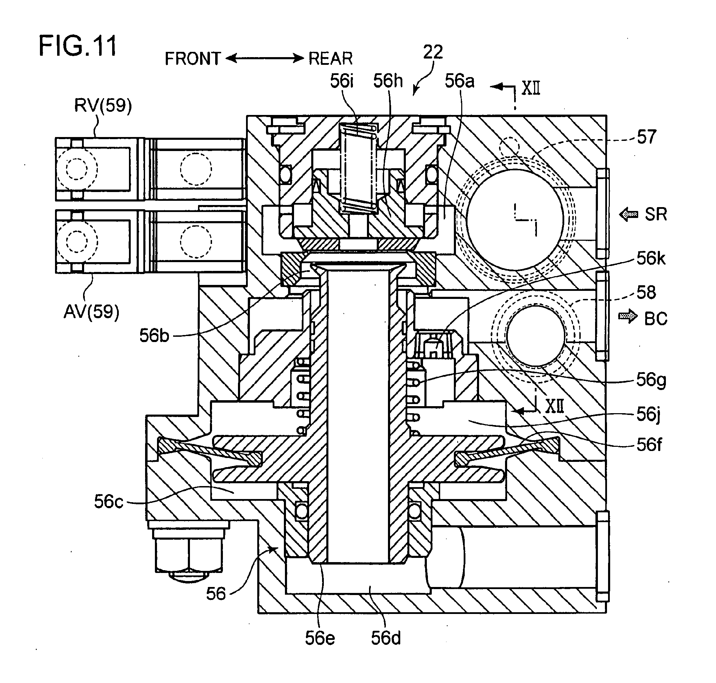

As shown in FIG. 11, the relay valve unit 56, the supply cut-off valve 57, the discharge valve 58 and a line for allowing them to be communicated with each other, are integrally provided in a relay valve block 61. The relay valve unit 56 is adapted to receive an input of a pressure adjusted by the solenoid valve 59, as a pilot pressure, and output the brake pressure BC. Specifically, the relay valve unit 56 includes: an input chamber 56a having an input port; an output chamber 56b having an output port; a control chamber 56c having a pilot port; a discharge chamber 56d having a discharge port; a hollow piston 56e; a membrane plate 56f, a spring 56g, a valve element 56h and a spring 56i.

The input chamber 56a is adapted to receive an input of the source pressure SR supplied through the supply cut-off valve 57, via the input port. The pilot port is connected to the connection line 59a of the solenoid valve 59, and the control chamber 56c is adapted to receive the pilot pressure via the pilot port. The output chamber 56c is adapted to generate a brake pressure depending on the pilot pressure, and output the brake pressure via the output port. The discharge chamber 56d is adapted to release an excess pressure via the discharge port. A silencer 67 is provided in a discharge line 66 communicated with the discharge port.

The membrane plate 56f is adapted, according to a pressure difference between an air pressure in the control chamber 56c and an air pressure in the output chamber 56b, to be bent so as to displace the piston 56e against a biasing force of the spring 56g. When the piston 56e is displaced upwardly, the valve element 56h is moved upwardly against a biasing force of the spring 56i, so that the input chamber 56a and the output chamber 56b are placed in a communicated state. Then, when the pressure difference is eliminated, the piston 56e is displaced downwardly, and the valve element 56h is moved by the spring 56i, so that the input chamber 56a and the output chamber 56b are placed in a non-communicated state. Conversely, when the piston 56e is displaced downwardly, the output chamber 56b and the discharge chamber 56d are placed in a communicated state through a hollow portion of the piston 56e. In this state, the output pressure also flows into a spring chamber 56j, and acts on the piston 56e in a direction causing it to be pressed downwardly. Then, when the pressure difference between the pressure in the control chamber 56c and the output pressure (spring chamber 56j) is eliminated, the piston 56e is displaced upwardly, so that the output chamber 56b and the discharge chamber 56d are placed in a non-communicated state.

In other words, based on means for causing compressed air in the input chamber 56a to flow into the output chamber 56b or causing compressed air in the output chamber 56b to be discharged into the discharge chamber 56d, a pressure in the output chamber 56b is adjusted to a brake pressure depending on the pilot pressure.

Meanwhile, in order to prevent the piston 56e from responding to a transitional pressure change in the output chamber 56b with excessive sensitivity, the spring chamber 56j and the output chamber 56b are communicated with each other through an orifice 56k.

The release solenoid valve 60 is comprised of a 2-position/3-port changeover valve, wherein it has an inlet port IN, an outlet port OUT and a discharge port EX. The release solenoid valve 60 is adapted to be switchable between a first mode and a second mode. As shown in FIG. 10, in the first mode, the inlet port IN is cut off, and the outlet port OUT and the discharge port EX are communicated with each other. The discharge port EX is communicated with an air outlet of the brake control device 10. Thus, in the first mode, a state illustrated in FIG. 10 is established by a spring force of an after-mentioned spring chamber 57f. The release solenoid valve 60 is adapted to be switched to the second mode based on a forcible brake release command from an operator's cab. In the second mode, the source pressure SR input into the inlet port IN is output from the outlet port OUT. The release solenoid valve 60 is normally in the first mode. However, when the forcible brake release command is input into the control circuit comprised of a microcomputer circuit mounted on the control board 23, the release solenoid valve 60 is switched to the second mode in response to the received command. The forcible brake release command is a signal to be sent to the brake control device 10 based on a manual operation from an operator's cab by an operator or other person when a brake unreleased state of wheels is detected.

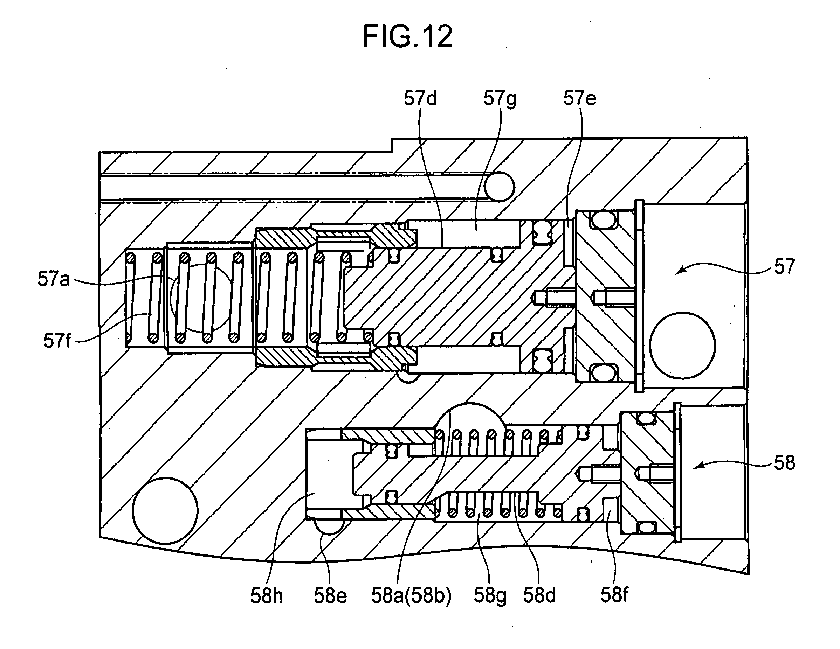

As shown in FIG. 12, each of the supply cut-off valve 57 and the discharge valve 58 has a shape elongated in a direction perpendicular to the frontward-rearward direction (i.e., in a rightward-leftward direction). Further, when viewed from the side of the membrane plate 56f of the relay valve unit 56 in the rightward-leftward direction, at least a part of each of the supply cut-off valve 57 and the discharge valve 58 is located on the side of the valve element 56h in such a manner as fall within an area between the pipe seat 14 and the valve element 56h and on a radially inward side of the membrane plate 56f (see FIG. 11). Further, when viewed from the side of the membrane plate 56f of the relay valve unit 56, the supply cut-off valve 57 is disposed closer to the valve element 56h, because it is larger than the discharge valve 58 (see FIG. 11).

The supply cut-off valve 57 includes an inlet port 57a, an outlet port 57b, a control port 57c and a piston 57d. An internal space of the supply cut-off valve 57 is divided by the piston 57d into a control chamber 57e, a spring chamber 57f, a first chamber 57g and a second chamber 57h. The control chamber 57e is provided with a control port 57c. The control port 57c is communicated with the outlet port 57b of the release solenoid valve 60, wherein the piston 57d is adapted to be displaced between a first position and a second position, according to the modes of the release solenoid valve 60. Specifically, when the release solenoid valve 60 is in the first mode, the piston 57d is set to the first position where the inlet port 57a and the outlet port 57b are opened to the spring chamber 57f. Further, when the release solenoid valve 60 is in the second mode, the piston 57d is set to the second position. In the second position, the inlet port 57a is opened to the first chamber 57g, and the outlet port 57b is opened to the second chamber 57h. Thus, the supply cut-off valve 57 is operable, when the release solenoid valve 60 is in the first mode, to input the source pressure SR into the input chamber 56a of the relay valve unit 56, and, in response to switching the release solenoid valve 60 to the second mode, to cut off the source pressure SR to be input into the relay valve unit 56.

The discharge valve 58 includes an inlet port 58a, an outlet port 58b, a control port 58c, an discharge port 58e and a piston 58d. An internal space of the discharge valve 58 is divided by the piston 58d into a control chamber 58f, a spring chamber 58g and a switching chamber 58h. The inlet port 58a is connected to the output port of the relay valve unit 56. The outlet port 58b is connected to the brake cylinder 49 (see FIG. 13). A pressure output from the outlet port 58b serves as the brake pressure BC. A brake pressure sensor 64 is provided in a line extending from the outlet port 58b to the brake cylinder 49. The discharge port 58e is connected to the discharge line 66. The control chamber 58f is provided with the control port 58c. The control port 58c is communicated with the outlet port OUT of the release solenoid valve 60, wherein the piston 58d is adapted to be displaced between a first position and a second position, according to the modes of the release solenoid valve 60. Specifically, when the release solenoid valve 60 is in the first mode, the piston 57d is set to the first position. In the first position, the inlet port 58a and the outlet port 58b are opened to the switching chamber 58h, and the discharge port 58e is opened to the spring chamber 58g. Further, when the release solenoid valve 60 is in the second mode, the piston 58d is set to the second position. In the second position, both of the inlet port 58a and the outlet port 58b and the discharge port 58e are opened to the spring chamber 58g. Thus, the discharge valve 58 is operable, when the release solenoid valve 60 is in the first mode, to output the brake pressure BC from the outlet port 58b, and, in response to switching the release solenoid valve 60 to the second mode, to discharge the brake pressure BC via the discharge port 58e.

Although the discharge valve 58 illustrated in FIGS. 7 and 10 has a structure slightly different from that of the discharge valve 58 illustrated in FIG. 12, this is for the purpose of simplifying illustration, and it is functionally equivalent to the discharge valve 58 illustrated in FIG. 12.

Each of the solenoid valves 52, 59, 60 provided in the variable load valve 21 and the relay valves 22, 22, and the sensors 52b, 63, 64 is provided with a connector 69 (see FIG. 1) for connecting a signal line thereto. Each of the connectors 69 is disposed on the front surface of a respective one of the variable load valve 21 and other components in a frontwardly-facing posture.

The following description will be made about operational control of the brake control device 10 according to the first embodiment.

The control circuit comprised of a microcomputer circuit (control board 23) sets the pressure HVL and the load compensating pressure VL according to a signal from the pressure sensor AS, and transmits a control signal to the solenoid valve 52. Further, when the control circuit receives the normal brake command, the control circuit sets a brake pressure according to the received command, and transmits a control signal to the solenoid valves 59, 59 of the relay valves 22, 22.

In the variable load valve 21, a pressure corresponding to the full-load-condition load compensating pressure is output from the pressure regulating valve 50, and the charging unit AV and the discharging unit RV of the solenoid valve 52 are operated according to a pilot signal, so that the pressure HVL is input into the output valve 51. In the output valve 51 of the variable load valve 21, the piston 51c is displaced using the pressure HVL as a pilot pressure, so as to output the load compensating pressure VL.

The load compensating pressure VL is output from the variable load valve 21 and input into the relay valves 22, 22. In each of the relay valves 22, 22, respective valve positions of the charging unit AV and the discharging unit RV of the solenoid valve 59 are adjusted according to the control signal to adjust the load compensating pressure VL to a given pressure. This pressure is input into the relay valve unit 56 as a pilot pressure via the connection line 59a. In the relay valve unit 56, the piston 56e is displaced according to the pilot pressure to adjust the source pressure SR input into the input port thereof, and output a resulting brake pressure BC from the output port thereof. During this operation, the valve positions of the charging unit AV and the discharging unit RV are adjusted according to a detection value from the pilot pressure sensor 63 and a detection value from the brake pressure sensor 64.

Further, the control circuit operates to correct a value of the brake pressure BC to be output from the relay valve unit 56, in accordance with the calculation result from the wheel-skid detection section (illustration is omitted). During this operation, the control circuit operates to reduce a value of the brake pressure BC until the calculation result from the wheel-skid detection section becomes indicative of no wheel skid. In this case, a value of the brake pressure BC may be reduced in a stepwise manner. The wheel skid is detected based on a mismatch between an actual car speed and a car speed calculated from a wheel speed.

The release solenoid valve 60 of the relay valve 22 is normally in the first mode. However, when the forcible brake release command is input from the operator's cab into the control circuit, the release solenoid valve 60 is switched to the second mode in response to the received command. Consequently, the brake pressure BC is discharged via the discharge valve 58, so that a brake unreleased state is released.

As described above, in the variable load valve 21 in the first embodiment, bases on a control signal output according to a pressure detected by the pilot pressure sensor 52b, the solenoid valve 52 is operable to charge/discharge air pressure to adjust the pilot pressure HVL for the output valve 51. Then, the output valve 51 is operable to output a pressure obtained by adding the pilot pressure HVL and a pressure corresponding to the empty-condition load compensating pressure based on the biasing force of the empty-condition assuring spring 51d, as the load compensating pressure VL. This means that a pressure adjustment for obtaining the load compensating pressure VL can be performed based on an electric signal. Thus, it becomes possible to eliminate the use of a balancing beam and a stepping motor which have been required for conventional techniques, and therefore downsize the variable load valve 21. In addition, the pressure corresponding to the empty-condition load compensation pressure is ensured by the empty-condition assuring spring 51d of the output valve 51, so that, even if the pilot pressure is vanished due to failure, etc, a minimum brake force can be output (fail-safe). Thus, the variable load valve 21 can be downsized while ensuring a minimum fail-safe function.

Further, in the variable load valve 21 in the first embodiment, when the solenoid valve 52 is not energized, a line between the pressure regulating valve 50 and the output valve 51 is cut off. Thus, even in the event of an electrical failure or the like, a pressure in the output valve 51 just before the failure can be maintained. Therefore, even in the event of an electrical failure, the load compensating pressure VL which has been output just before the failure, can be maintained to prevent a brake force from being rapidly changed during the electrical failure.

In the variable load valve 21 in the first embodiment, the pressure regulating valve 50 and the output valve 51 are integrally provided in the variable-load-valve block 53, so that it becomes possible to facilitate attaching to the pipe seat 14.

In the brake control device 10 according to the first embodiment, based on downsizing of the variable load valve 21, the brake control device 10 can be downsized accordingly.

Further, in the brake control device 10 according to the first embodiment, each of the full-load-condition-pressure adjusting screw 50f and the empty-condition-pressure adjusting screw 51f of the variable load valve 21 is installed on the side of the front surface, so that it becomes possible to easily perform a pressure adjustment operation, and eliminate a need for ensuring a space for the pressure adjustment operation, in the brake control device 10, which contributes to further downsizing of the brake control device 10.

In the brake control device 10 according to the first embodiment, the control board 23 is disposed in front of the relay valves 22, 22 and the variable load valve 21, so that it becomes possible to reduce lateral and vertical widths of the brake control device 10 based on the arrangement.

In addition, the control board 23 is installed in the back of the lid member 13, so that the variable load valve 21 and the relay valves 22, 22 can be exposed by unclosing the receiving space through means of the lid member 13, without detaching the control board 23 disposed in front of the variable load valve 21 and the relay valves 22, 22. This makes it possible to prevent a maintenance task for the variable load valve 21 and the relay valves 22, 22 from becoming complicated so as to ensuring maintenance performance. In addition, the control board 23 is located frontward of the variable load valve 21 and the relay valves 22, 22 when viewed from the side of the opening, so that it becomes possible to prevent an increase in horizontal and vertical widths of the casing body 12 when viewed from the side of the opening.

In the first embodiment, an electric line can be housed in a space defined by the variable load valve 21 and the relay valves 22, 22 within the casing 11, so that it is unnecessary to additionally provide a space for housing the electric line. Thus, this is effective in facilitating downsizing the brake control device 10. In addition, the receiving space is located on the side of the hinge in the casing 11, so that, even if the lid member 13 is formed as a hinged door, it becomes possible to prevent an electric line from being adversely affected by opening/closing of the lid member 13.

In the first embodiment, the control board 23 is provided with the cover 40, so that it becomes possible to prevent a tool from coming into direct contact with the control board 23, during an attaching or detaching operation for the relay valves 22, 22 or the variable load valve 21. This makes it possible to prevent an element mounted on the control board 23 from being damaged, or prevent an operator from getting electric shock.

In the first embodiment, respective control states of the variable load valve 21 and the relay valves 22, 22 can be checked by the indicator 41 provided in the control board 23, while actually operating the variable load valve 21 or the relay valves 22, 22 and checking an operational statuses thereof. Thus, it becomes possible to eliminate a need for preparing other device such as a personal computer for operation check, to further reduce the burden of the maintenance task, and therefore provide enhanced maintenance performance.

In the first embodiment, the body-side portion 28a and the lid-side potion 28b of the hinge member 28 in the casing 11 are adapted to be separable from each other, so that an electric system (control board 23) provided in the lid member 13 and a mechanical system (variable load valve 21, relay valves 22, 22) provided in the casing body 12 can be separated from each other. This allows an operator in charge of maintenance for the electric system and an operator in charge of maintenance for the mechanical system, to simultaneously perform the respective tasks. This makes it possible to shorten a time required for the maintenance.

In the first embodiment, the first engagement portion 17a of the mounting seat 16 and the second engagement portion 17b of the pipe seat 14 are engaged with each other to allow the pipe seat 14 to be held in a state of being supported by the mounting seat 16. Thus, a weight of the pipe seat 14, the variable load valve 21 and the relay valves 22, 22 can be supported by the mounting seat 16, so that an operation of attaching and detaching the brake control device 10 can be performed by one operator. This makes it possible to facilitate laborsaving in the maintenance task.

In the first embodiment, the lid member 13 of the casing 11 is provided with the water-intrusion preventing member 37, so that, in the brake control device 10 where the lid member 13 is manually opened to allow maintenance for the variable load valve 21 and the relay valves 22, 22 to be performed, it becomes possible to prevent water droplets or the like on the casing from intruding into the casing body 12. This makes it possible to reduce time and effort for sufficiently wiping away water droplets or the like on the casing, to shorten a time required for the maintenance.

In the first embodiment, a pilot pressure is adjusted in the relay valves 22, 22 according to wheel skid detection so as to adjust a value of the brake pressure BC to be generated. This makes it possible to achieve an anti-skid function based on the relay valves 22, 22, without providing an anti-skid valve separately from the relay valves 22, 22.

Further, the forcible brake release control can be performed by operating the release solenoid valve 60, the supply cut-off valve 57 and the discharge valve 58. Specifically, when the release solenoid valve 60 is in the first mode, the source pressure SR is supplied to the relay valve unit 56 via the supply cut-off valve 57, so that a normal brake pressure BC can be generated. Further, when the forcible brake release command is input into the brake control device 10, the release solenoid valve 60 is switched to the second mode. Thus, an input of the source pressure SR into the relay valve unit 56 is cut off, and the brake pressure is discharged. This makes it possible to forcibly release a brake unreleased state.

Thus, a need for a valve element as a anti-skid valve can be eliminated, and only the release solenoid valve 60, the supply cut-off valve 57 and the discharge valve 58 may be added. Differently from the anti-skid valve, each of the above valves is not required to proportionally control pressure, so that it can be structurally simplified. This makes it possible to facilitate downsizing of the brake control device 10 with an anti-skid function and a forcible brake release function.

In the first embodiment, at least a part of each of the supply cut-off valve 57 and the discharge valve 58 is located inside an area on a radially inward side of the membrane plate 56f within the block 61 constituting the relay valves 22, 22, so that a dead space in the block 61 can be effectively utilized to facilitate downsizing of the brake control device 10 with the anti-skid function and the forcible brake release function..

In the first embodiment, each of the relay valves 22, 22 is operable to reduce a brake force in a stepwise manner until wheel skid becomes undetected, so that it becomes possible to generate an optimal brake force while preventing skid.

### (SECOND EMBODIMENT)

FIG. 13 is a block diagram illustrating a control operation of a brake control device according to a second embodiment of the present invention. The second embodiment relates to a brake control device 10 intended to be provided in a car which has a brake cylinder 49, an air tank 45 as a fluid supply source which is a supply source for a fluid to be supplied to the brake cylinder 49, and an emergency brake command line 71 for effecting an emergency brake. In this brake control device 10, a forcible brake release control can be stopped by a shutoff circuit 72 in response to receiving an emergency brake command. A difference from the first embodiment will be specifically described below.

As shown in FIG. 13, a release solenoid valve 60 is electrically connected to an emergency brake command line 71 through a shutoff circuit 72 as a shutoff section. In a normal state when no emergency brake command is issued, the emergency brake command line 71 is applied with a voltage, for example, of DC 100 V. On the other hand, when an emergency command is issued, the voltage of the emergency command line 71 is lowered to 0 (zero) V. Specifically, when no emergency command is issued, the emergency command line 71 is applied with a voltage enough to supply electric power to the release solenoid valve 60. However, when the emergency command is issued, the voltage application is stopped to preclude supply of electric power to the release solenoid valve 60. The above "DC 100 V" is expressed in a rated voltage, and is 87 V in nominal voltage. The voltage value varies depending on an applicable standard, and there are 24 V, 48V, 72V, 87 V, 96V and 110 V, as nominal voltage.

The shutoff circuit 72 has a contact 72a, and is on-off controlled according to electric power to be supplied from the control circuit 74. The control circuit 74 supplies the shutoff circuit 72 with electric power in a normal state when the shutoff circuit 72 is energized. The shutoff circuit 72 is adapted, when it is not supplied with electric power from the control circuit 74, to close the contact 72a, and, in response to supply of electric power from the control circuit 74, to open the contact 72a. In other words, in the normal state, the shutoff circuit 72 is shut off between the emergency brake command line 71 and the release solenoid valve 60. Further, under a condition that there is no emergency command, the shutoff circuit 72 is operable, in response to stopping the supply of electric power from the control circuit 74, to close the contact 72a to supply electric power (DC 100 V) of the emergency brake command line 71 to the release solenoid valve. Further, the control circuit 74 is operable, in response to receiving the forcible release command, to stop the supply of electric power to the shutoff circuit 72. Consequently, the contact 72a of the shutoff circuit 72 is closed. Thus, when the forced brake release command is input into the control circuit 74, the release solenoid valve 60 which is normally in the first mode, is switched to the second mode.

The control circuit 74 is operable, in response to receiving the emergency brake command, to continue the supply of electric power so as to maintain the shutoff state of the shutoff circuit 72. Alternatively, the control circuit 74 may be configured to stop the supply of electric power to the shutoff circuit 72, in response to receiving the emergency brake command, or may be devoid of a function of monitoring of the presence or absence of input of the emergency brake command. Because when the emergency brake command is issued, the emergency brake command line 71 is set to 0 (zero) V, and thereby no electric power is supplied to the release solenoid valve 60, irrespective of the open/closed state of the shutoff circuit 72.

The forcible brake release command is a signal to be sent to the brake control device 10 based on a manual operation from an operator's cab by an operator or other person when a brake unreleased state by the brake cylinder 49 is detected. The emergency brake command is a signal to be sent to the brake control device 10 based on a manual operation from an operator's cab by an operator or other person. In FIG. 13, although the control circuit 74 is illustrated as two control circuits (a control circuit 74 connected to the shutoff circuit 72, a control circuit 74 connected to the solenoid valve 59) for convenience of illustration, they are identical to each other.

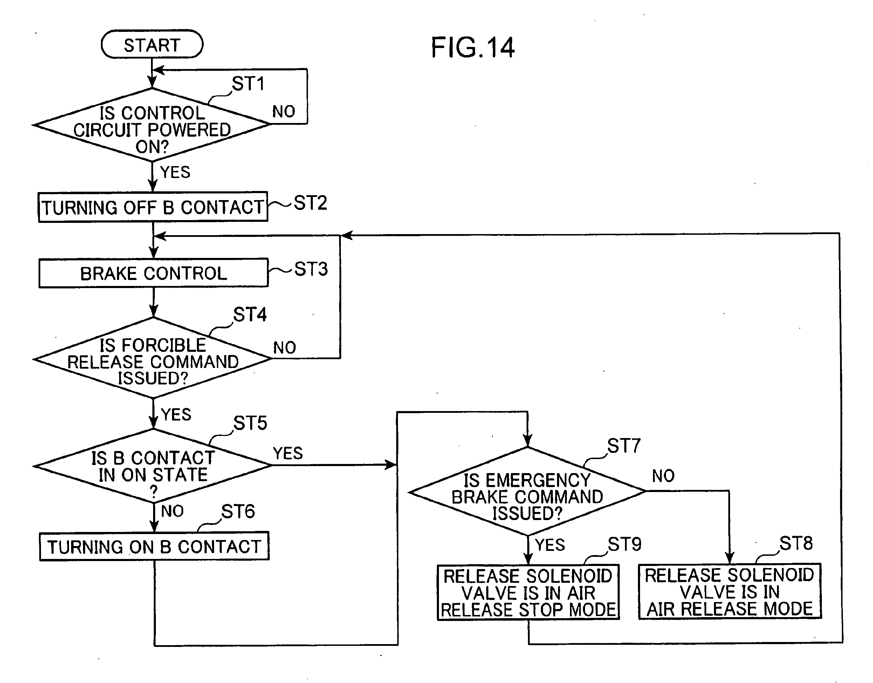

With reference to FIG. 14, the control operation of the brake control device 10 in FIG. 13 will be described below.

When the control circuit 74 comprised of a microcomputer is powered on, electric power is supplied from the control circuit 74 to the shutoff circuit 72 (Step ST1). According to the power supply, the shutoff circuit 72 opens the contact 72a (Step ST2). Thus, the release solenoid valve 60 is maintained in the first state.

Then, in response to receiving the normal brake command, brake control is performed (Step ST3). In this Step, the control circuit 74 sets a brake pressure according to the command, and sends a control signal to the solenoid 59, 59 of the relay valves 22, 22.

In the variable load valve 21, a pressure corresponding to the full-load-condition load compensating pressure is output from the pressure regulating valve 50, and the charging unit AV and the discharging unit RV of the solenoid valve 52 are operated according to a pilot signal, so that the pressure HVL is input into the output valve 51. In the output valve 51 of the variable load valve 21, the piston 51c is displaced using the pressure HVL as a pilot pressure, so as to output the load compensating pressure VL.

The load compensating pressure VL is output from the variable load valve 21 and input into the relay valves 22, 22. In each of the relay valves 22, 22, respective valve positions of the charging unit AV and the discharging unit RV of the solenoid valve 59 are adjusted according to the control signal to adjust the load compensating pressure VL to a given pressure. This pressure (brake command pressure) is input into the relay valve unit 56 as a pilot pressure via the connection line 59a. In the relay valve unit 56, the piston 56e is displaced according to the pilot pressure to output a resulting brake pressure BC from the output port thereof. During this operation, the valve positions of the charging unit AV and the discharging unit RV are adjusted according to a detection value from the pilot pressure sensor 63 and a detection value from the brake pressure sensor 64.

Further, the control circuit 74 operates to correct a value of the brake pressure BC to be output from the relay valve unit 56, in accordance with the calculation result from the wheel-skid detection section (illustration is omitted). During this operation, the control circuit 74 operates to reduce a value of the brake pressure BC until a signal indicative of wheel skid becomes unable to be received from the wheel-skid detection section. In this case, a value of the brake pressure BC may be reduced in a stepwise manner. When wheel skid becomes undetected, in the relay valve unit 56, volume amplification is performed again according to a pressure difference between a pressure in the output chamber 56b and the pilot pressure in the control chamber 56c to gradually increase a value of the brake pressure BC to be output. Thus, it becomes possible to prevent the brake pressure BC from being rapidly changed so as to suppress shock.

In the brake control in Step ST3, it is determined whether a brake unreleased state occurs (not shown). If the brake unreleased state occurs, the presence or absence of the forcible brake release command is monitored (Step ST4). Otherwise, if no brake unreleased state occurs, the brake control in Step ST3 will be continued. The release solenoid valve 60 of the relay valve 22 is normally in the first mode. However, when the forcible brake release command output by a manual operation in an operator's cab is input into the control circuit 74, the output from the control circuit 74 is stopped. Thus, when the contact 72a is not closed, the shutoff circuit 72 closes the contact 72a (Step ST5 and ST6). Then, it is determined whether the emergency brake command is input into the control circuit 74 (Step ST7). If the emergency brake command is not input, the voltage of the emergency brake command line 71 is applied to the release solenoid valve 60, so that the release solenoid valve 60 is switched to the second state. Thus, the brake pressure BC is discharged through the discharge valve 58 to release the brake unreleased state (Step ST8).

Otherwise, if the emergency brake command is input, the routine shifts to Step ST9. Specifically, when the emergency brake command is input, the emergency brake command line 71 is set to 0 (zero) V, and no voltage is applied to the release solenoid valve 60. Consequently, the release solenoid valve 60 is set to the first mode again. This makes it possible to stop the discharge from the discharge valve, and effect an emergency brake based on the brake pressure BC of the brake cylinder 49.

As described above, in the brake control device 10 according to the second embodiment, when no emergency brake command is issued, the relay valve unit 56 can be operated based on the normal brake command, so that a brake pressure BC depending on the normal brake command can be generated. In addition, the relay valve unit 56 can be operated in accordance with a calculation result from the wheel skid detection section, which allows anti-skid control based on the calculation result. Then, when the forcible brake release command is issued, the shutoff circuit 72 operates to close the contact 72a. If the emergency brake command is not issued at this timing, electric power in the emergency brake command line 71 can be supplied to the release solenoid valve 60 to operate the release solenoid valve 60. Thus, according to a pilot pressure from the release solenoid valve 60, the supply cut-off valve 57 cuts off supply of fluid to the relay valve unit 56, and the discharge valve 58 discharges the brake pressure. Through this operation, a brake unreleased state is released.

Otherwise, when the emergency brake command is issued, the voltage of the emergency brake command line 71 becomes 0 (zero) V, and thereby no electric power is supplied to the release solenoid valve 60, irrespective of opening/closing of the contact 72a of the shutoff circuit 72. Thus, the release solenoid valve 60 is maintained in a non-energized state, so that an emergency brake can be effected in priority to the forcible brake release control, without operating the supply cut-off valve 57 and the discharge valve 58. Further, when the emergency brake command is issued, continuation of the forcible brake release control can be avoided even if an on/off operation of the contact cannot be performed due to failure of the shutoff circuit 72, because the voltage of the emergency brake command line 71 becomes 0 (zero) V, so that the emergency brake can be reliably effected. Thus, based on allowing the shutoff circuit 72 to be connected to the emergency brake command line 71, it becomes possible to eliminate a need for guaranteeing high reliability by a structure of the shutoff circuit 72, so that the shutoff circuit 72 can be structurally simplified to facilitate a reduction in cost.

In the second embodiment, when the brake pressure BC is discharged, the pressure in the brake cylinder 49 is discharged together with the pressure in the relay valve unit 56. Thus, the pressure in the brake cylinder 49 and the pressure in the relay valve unit 56 become approximately equal to each other. This makes it possible to reduce shock occurring when the brake pressure BC restarts to be supplied from the relay valve unit 56 to the brake cylinder 49.

It is to be understood that the present invention is not limited to the above embodiments but various changes and modifications may be made therein without departing from the sprit and scope of the present invention. For example, in the above embodiments, although the brake control device is designed to have the pair of relay valves 22, 22, it may be designed to have only one relay valves 22.

Further, in the above embodiments, the brake control device is designed such that the lid member 13 is swingably supported by the casing body 12. Alternatively, a structure may be employed which is designed such that the receiving apace in the casing 11 is closed/unclosed by simply attaching/ detaching the lid member 13 without swingably moving it.

In the above embodiments, the water-intrusion preventing member 37 is provided in the lid member 13. Alternatively, the water-intrusion preventing member 37 may be provided in the casing body 12.

In the above embodiments, the first engagement portion 17a provided in the mounting seat 16 is formed in a protruded shape, and the second engagement portion 17b of the pipe seat 14 is formed as a through-hole. Alternatively, the first engagement portion 17a of the mounting seat 16 may be formed as a through-hole, and the second engagement portion 17b of the pipe seat 14 may be formed in a protruded shape (convex shape).

In the above embodiments, the brake control device is designed such that the lid member 13 is swingably supported by the casing body 12. Alternatively, a structure may be employed which is designed such that the receiving apace in the casing 11 is closed/unclosed by simply attaching/ detaching the lid member 13 without swingably moving it.

In the above embodiments, the water-intrusion preventing member 37 is provided in the lid member 13. Alternatively, the water-intrusion preventing member 37 may be provided in the casing body 12.

Except for FIGS. 7, 8, 10, 13 and 14, each of the figures is illustrated with an accuracy equivalent to engineering drawing.

### [SUMMARY OF THE EMBODIMENTS]

The above embodiments will be summarized as follows.

(1) In the variable load valve in each of the above embodiments, the solenoid valve is operable to charge/discharge air pressure in accordance with an electric signal output depending on a pressure detected by the pilot pressure sensor to thereby adjust a pilot pressure for the output valve. Then, the output pressure valve is operable to output a pressure obtained by adding the pilot pressure and the empty-condition load compensating pressure based on the biasing force of the empty-condition assuring spring, as a load compensating pressure. This means that a pressure adjustment for obtaining the load compensating pressure can be performed based on an electric signal. Thus, it becomes possible to eliminate the use of a balancing beam and a stepping motor which have been required for conventional techniques, and therefore downsize the variable load valve. In addition, the pressure corresponding to the empty-condition load compensation pressure is ensured by the empty-condition assuring spring of the output valve, so that, even if the pilot pressure is vanished due to failure, etc, a minimum brake force can be output (fail-safe). Thus, the variable load valve can be downsized while ensuring a minimum fail-safe function.

(2) Preferably, in the above variable load valve, the solenoid valve is operable, when it is in a non-energized state, to cut off between the pressure regulating valve and the output valve. In this variable load valve, when the solenoid valve is not energized during an electrical failure or the like, a line between the pressure regulating valve and the output valve is cut off. Thus, even in the event of an electrical failure or the like, a pressure in the output valve just before the failure can be maintained.

(3) Preferably, the pressure regulating valve and the output valve are integrally provided in a block. This makes it possible to facilitate attaching to the pipe seat.

(4) Each of the above embodiments relates to a brake control device which comprises the above variable load valve, and a relay valve including a solenoid valve adapted to receive an input of the load compensating pressure, wherein the relay valve is operable, based on a control pressure generated by means of air pressure charging/discharging of the solenoid valve, to output a brake pressure for driving a brake cylinder. According to this feature, based on downsizing of the variable load valve, the brake control device can be downsized accordingly.

(5) Preferably, the above brake control device comprises: a casing body having a receiving space capable of housing the variable load valve and the relay valve, and an opening facing the receiving space; a lid member capable of opening and closing the opening; and a pipe seat provided on a surface of the casing body opposed to the lid member, wherein: the variable load valve has a back surface attachable to the pipe seat; the pressure regulating valve includes a full-load-condition assuring spring for limiting an output pressure therefrom to a pressure corresponding to the full-load-condition load compensating pressure, and a full-load-condition-pressure adjusting screw for adjusting a biasing force of the full-load-condition assuring spring; and the output valve includes an empty-condition-pressure adjusting screw for adjusting a biasing force of the empty-condition assuring spring, and wherein each of the full-load-condition-pressure adjusting screw and the empty-condition-pressure adjusting screw is installed in a front surface on a side opposite to the back surface.

In this brake control device, each of the full-load-condition-pressure adjusting screw and the empty-condition-pressure adjusting screw is installed on the side of a front surface having the lid member, so that it becomes possible to easily perform a pressure adjustment operation, and eliminate a need for ensuring a space for the pressure adjustment operation, in the brake control device, which contributes to further downsizing of the brake control device.

(6) When the above brake control comprises a control board capable of controlling the variable load valve and the relay valve, it is preferable that the control board is installed in front of the relay valve and the variable load valve. In this brake control device, the control board is disposed in front of the relay valve and the variable load valve, so that it becomes possible to reduce lateral and vertical widths of the brake control device based on the arrangement.

(7) When the above brake control device comprises: a casing body having a receiving space capable of housing the variable load valve and the relay valve, and an opening facing the receiving space; and a lid member capable of opening and closing the opening, it is preferable that the control board is installed in a back of the lid member. According to this feature, the variable load valve and the relay valve can be exposed by unclosing the receiving space through means of the lid member, without detaching the control board. This makes it possible to prevent a maintenance task for the variable load valve and the relay valve from becoming complicated.

(8) When the lid member is coupled to the casing body through a hinge member, in an openable manner in a rightward-leftward direction, and the relay valve is comprised of a pair of the relay valves provided in such a manner that they are arranged side-by-side in a horizontal direction, wherein the variable load valve is installed in a space just above or below one of the relay valves on a side opposite to the hinge member, it is preferable that the brake control device comprises a lead-in member which faces a space defined by the variable load valve and the relay valves on the side of the hinge member, to allow an electric line to be led therein.

In this brake control device, an electric line can be housed in a space defined by the variable load valve and the relay valves, so that it is unnecessary to additionally provide a space for housing the electric line. Thus, this is effective in facilitating downsizing the brake control device. In addition, the receiving space is located on the side of the hinge, so that, even if the lid member is formed as a hinged door, it becomes possible to prevent an electric line from being adversely affected by opening/closing of the lid member.

(9) Preferably, the control board is provided with an indicator capable of indicating respective control states of the variable load valve and the relay valve, wherein the indicator is attached to the control board in such a manner as to become visible when the opening of the casing body is unclosed by means of the lid member. According to this feature, respective control states of the variable load valve and the relay valve can be checked by the indicator of the brake control device itself , while actually operating the variable load valve or the relay valve and checking an operational statuses thereof. Thus, it becomes possible to eliminate a need for preparing other device such as a personal computer for operation check, to further reduce the burden of the maintenance task, and therefore provide enhanced maintenance performance.

(10) When the above brake control device comprises: a connector for allowing a signal line connected to the variable load valve or the relay valve to be detachably attached to the control board; and a hinge member having a body-side portion coupled to the casing body, and a lid-side portion coupled to the lid member in a swingable manner with respect to the body-side portion, it is preferable that the body-side portion and the lid-side portion are adapted to be separable from each other.

In this brake control device, an electric system (control board) provided in the lid member and a mechanical system (variable load valve, relay valve) provided in the casing body can be separated from each other. This allows an operator in charge of maintenance for the electric system and an operator in charge of maintenance for the mechanical system, to simultaneously perform the respective tasks. This makes it possible to shorten a time required for the maintenance.

(11) When the solenoid valve of the relay valve is operable, based on a normal brake command and a wheel skid state, to adjust the load compensating pressure, it is preferable that the relay valve includes: a relay valve unit adapted to receive an input of a pressure adjusted by the solenoid valve, as a pilot pressure, and operable to output a brake pressure; a release solenoid valve adapted to be switchable between a first mode, and a second mode based on a forcible brake release command; a supply cut-off valve operable, when the release solenoid valve is in the first mode, to input a source pressure into the relay valve unit, and in response to switching the release solenoid valve to the second mode, to cut off the source pressure to be input into the relay valve unit; and a discharge valve operable, when the release solenoid valve is in the first mode, to output the brake pressure from the relay valve unit, and, in response to switching the release solenoid valve to the second mode, to discharge the brake pressure.

According to this feature, a pilot pressure is adjusted in the relay valve according to wheel skid detection so as to adjust a brake pressure to be generated. This makes it possible to achieve an anti-skid function based on the relay valve without providing an anti-skid valve separately from the relay valve.

Further, a forcible brake release control can be performed by operating the release solenoid valve, the supply cut-off valve and the discharge valve. Specifically, when the release solenoid valve is in the first mode, the source pressure is supplied to the relay valve unit via the supply cut-off valve, so that a normal brake pressure can be generated. Further, when the forcible brake release command is input into the brake control device, the release solenoid valve is switched to the second mode. Thus, an input of the source pressure into the relay valve unit is cut off, and the brake pressure is discharged. This makes it possible to forcibly release a brake unreleased state.

Thus, a need for a valve element as a anti-skid valve can be eliminated, and only the release solenoid valve, the supply cut-off valve and the discharge valve may be added. Differently from the anti-skid valve, each of the above valves is not required to proportionally control pressure, so that it can be structurally simplified. This makes it possible to facilitate downsizing of the brake control device with an anti-skid function and a forcible brake release function.

(12) Preferably, the relay valve unit, the supply cut-off valve and the discharge valve are integrally provided in a block, wherein at least a part of each of the supply cut-off valve and the discharge valve is located inside an area on a radially inward side of a membrane plate of the relay valve unit. According to this feature, at least a part of each of the supply cut-off valve and the discharge valve is located inside an area of the membrane plate within a block constituting the relay valve, so that a dead space in the block can be effectively utilized to facilitate downsizing of the brake control device with the anti-skid function and the forcible brake release function.

(13) Preferably, the relay valve is operable to reduce a brake force in a stepwise manner until wheel skid becomes undetected. This makes it possible to generate an optimal brake force while preventing skid.

(14) When the above brake control device is designed for a car which has a brake cylinder, a fluid supply source which is a supply source for a fluid to be supplied to the brake cylinder, and an emergency brake command line for effecting an emergency brake, wherein the solenoid valve of the relay valve is operable to output a pressure according to a signal corresponding to a normal brake command for effecting a brake weaker than the emergency brake, and a signal output from a wheel-skid detection section for detecting wheel skid of the car, it is preferable that the relay valve includes: a relay valve unit adapted to receive an input of the output from the solenoid valve of the relay valve, as a pilot pressure, and operable to generate a brake pressure to be supplied to the brake cylinder; a discharge valve operable, based on a pilot pressure input thereinto, to discharge the brake pressure; a shutoff section operable to close a contact in response to a forcible brake release command for forcibly reducing a value of the brake pressure; a release solenoid valve adapted to be supplied with electric power from the emergency brake command line through the shutoff section, so as to generate a pilot pressure for the discharge valve.

In this brake control device, when no emergency brake command is issued, the relay valve unit can be operated based on the normal brake command, so that a brake pressure depending on the normal brake command can be generated. In addition, the relay valve unit can be operated in accordance with a signal output from the wheel skid detection section, which allows anti-skid control based on the signal. Then, when the forcible brake release command is issued, the shutoff circuit operates to close the contact. If the emergency brake command is not issued at this timing, electric power in the emergency brake command line (which is generally applied with DC 100 V) can be supplied to the release solenoid valve to operate the release solenoid valve. Thus, according to a pilot pressure from the release solenoid valve, the discharge valve discharges the brake pressure. Through this operation, a brake unreleased state is released.

Otherwise, when the emergency brake command is issued, the voltage of the emergency brake command line becomes 0 V, and thereby no electric power is supplied to the release solenoid valve, irrespective of opening/closing of the contact of the shutoff section. Thus, the release solenoid valve is maintained in a non-energized state, so that an emergency brake can be effected in priority to the forcible brake release control, without operating the discharge valve. Further, when the emergency brake command is issued, continuation of the forcible brake release control can be avoided even if an on/off operation of the contact cannot be performed due to failure of the shutoff circuit, because the voltage of the emergency brake command line becomes 0 V, so that the emergency brake can be reliably effected. Thus, based on allowing the shutoff section to be connected to the emergency brake command line, it becomes possible to eliminate a need for guaranteeing high reliability by a structure of the shutoff section, so that the shutoff section can be structurally simplified to facilitate a reduction in cost. According to the above feature, in the brake control device with the anti-skid function and the forcible brake release function, it becomes possible to prevent a shutoff circuit for stopping the forcible brake release control from becoming structurally complicated, without spoiling reliability, and suppress an increase in cost.

(15) Preferably, the discharge valve is operable, when discharging the brake pressure, to discharge the brake pressure in the brake cylinder and the brake pressure in the relay valve all together. According to this feature, when the brake pressure is discharged, the pressure in the relay valve unit is also discharged. Thus, the pressure in the brake cylinder and the pressure in the relay valve unit become approximately equal to each other. This makes it possible to reduce shock occurring when the brake pressure restarts to be supplied from the relay valve unit to the brake cylinder.

## Claims

1. A variable load valve (21) capable of outputting a load compensating pressure according to a detection value from a sensor operable to detect a pressure of an air spring of a car, the variable load valve comprising:
a pressure regulating vatve (50) for limiting a pressure supplied from an air source to a pressure corresponding to a full-load-condition load compensating pressure, and outputting the resulting pressure;
a pilot pressure sensor (52b) for detecting the pressure output from the pressure regulating valve;
a solenoid valve (52) capable of charging/discharging air pressure, and operable, in accordance with a detection value from the pilot pressure sensor, to adjust the pressure output from the pressure regulating valve (50), by means of the charging/discharging, and output the resulting pressure; and
an output valve (51) adapted to receive an input of the pressure output from the solenoid valve (52), as a pilot pressure,
**characterized in that** the output valve (51) has an empty-condition assuring spring (51d) for generating an empty-condition load compensating pressure, the output valve being operable to output a pressure obtained by adding the pilot pressure and the empty-condition load compensating pressure based on a biasing force of the empty-condition assuring spring, as the load compensating pressure.

2. The variable load valve as defined in claim 1, wherein the solenoid valve is operable, when it is in a non-energized state, to cut off between the pressure regulating valve and the output valve.

3. The variable load valve as defined in claim 2, wherein the pressure regulating valve and the output valve are integrally provided in a block.

4. A brake control device comprising:
the variable load valve as defined in any one of claims 1 to 3; and
a relay valve including a solenoid valve adapted to receive an input of the load compensating pressure, the relay valve being operable, based on a control pressure generated by means of air pressure charging/discharging of the solenoid valve, to output a brake pressure for driving a brake cylinder.

5. The brake control device as defined in claim 4, which comprises:
a casing body having a receiving space capable of housing the variable load valve and the relay valve, and an opening facing the receiving space;
a lid member capable of opening and closing the opening; and
a pipe seat provided on a surface of the casing body opposed to the lid member,
wherein:
the variable load valve has a back surface attachable to the pipe seat;
the pressure regulating valve includes a full-load-condition assuring spring for limiting an output pressure therefrom to a pressure corresponding to the full-load-condition load compensating pressure, and a full-load-condition-pressure adjusting screw for adjusting a biasing force of the full-load-condition assuring spring; and
the output valve includes an empty-condition-pressure adjusting screw for adjusting a biasing force of the empty-condition assuring spring,
and wherein each of the full-load-condition-pressure adjusting screw and the empty-condition-pressure adjusting screw is installed in a front surface on a side opposite to the back surface.

6. The brake control device as defined in claim 4, which comprises a control board capable of controlling the solenoid valve of the variable load valve and the solenoid valve of the relay valve, the control board being installed in front of the relay valve and the variable load valve.

7. The brake control device as defined in claim 6, which comprises:
a casing body having a receiving space capable of housing the variable load valve and the relay valve, and an opening facing the receiving space; and
a lid member capable of opening and closing the opening,
wherein the control board is installed in a back of the lid member.

8. The brake control device as defined in claim 7, wherein:
the lid member is coupled to the casing body through a hinge member, in an openable manner in a rightward-leftward direction;
the relay valve is comprised of a pair of the relay valves provided in such a manner that they are arranged side-by-side in a horizontal direction; and
the variable load valve is installed in a space just above or below one of the relay valves on a side opposite to the hinge member,
wherein the brake control device comprises a lead-in member which faces a space defined by the variable load valve and the relay valves on the side of the hinge member, to allow an electric line to be led therein.

9. The brake control device as defined in claim 7, wherein the control board is provided with an indicator capable of indicating respective control states of the variable load valve and the relay valve, the indicator being attached to the control board in such a manner as to become visible when the opening of the casing body is unclosed by means of the lid member.

10. The brake control device as defined in claim 7, which comprises:
a connector for allowing a signal line connected to the variable load valve or the relay valve to be detachably attached to the control board; and
a hinge member having a body-side portion coupled to the casing body, and a lid-side portion coupled to the lid member in a swingable manner with respect to the body-side portion, the body-side portion and the lid-side portion being adapted to be separable from each other.

11. The brake control device as defined in claim 4, wherein the solenoid valve of the relay valve is operable, based on a normal brake command and a wheel skid state, to adjust the load compensating pressure, and wherein the relay valve includes:
a relay valve unit adapted to receive an input of a pressure adjusted by the solenoid valve, as a pilot pressure, and operable to output a brake pressure;
a release solenoid valve adapted to be switchable between a first mode, and a second mode based on a forcible brake release command;
a supply cut-off valve operable, when the release solenoid valve is in the first mode, to input a source pressure into the relay valve unit, and in response to switching the release solenoid valve to the second mode, to cut off the source pressure to be input into the relay valve unit; and
a discharge valve operable, when the release solenoid valve is in the first mode, to output the brake pressure from the relay valve unit, and, in response to switching the release solenoid valve to the second mode, to discharge the brake pressure.

12. The brake control device as defined in claim 11, wherein the relay valve unit, the supply cut-off valve and the discharge valve are integrally provided in a block, and wherein at least a part of each of the supply cut-off valve and the discharge valve is located inside an area on a radially inward side of a membrane plate of the relay valve unit.

13. The brake control device as defined in claim 11 or 12, wherein the relay valve is operable to reduce a brake force in a stepwise manner until wheel skid becomes undetected.

14. The brake control device as defined in claim 4, which is designed for a car which has a brake cylinder, a fluid supply source which is a supply source for a fluid to be supplied to the brake cylinder, and an emergency brake command line for effecting an emergency brake, wherein the solenoid valve of the relay valve is operable to output a pressure according to a signal corresponding to a normal brake command for effecting a brake weaker than the emergency brake, and a signal output from a wheel-skid detection section for detecting wheel skid of the car, and wherein the relay valve includes:
a relay valve unit adapted to receive an input of the output from the solenoid valve of the relay valve, as a pilot pressure, and operable to generate a brake pressure to be supplied to the brake cylinder;
a discharge valve operable, based on a pilot pressure input thereinto, to discharge the brake pressure;
a shutoff section operable to close a contact in response to a forcible brake release command for forcibly reducing a value of the brake pressure;
a release solenoid valve adapted to be supplied with electric power from the emergency brake command line through the shutoff section, so as to generate a pilot pressure for the discharge valve.

15. The brake control device as defined in claim 14, wherein the discharge valve is operable, when discharging the brake pressure, to discharge the brake pressure in the brake cylinder and the brake pressure in the relay valve all together.

## Patentansprüche

1. Lastabhängiges Ventil (21), das fähig ist, gemäß einem Erfassungswert von einem Sensor, der betriebsfähig ist, um einen Druck einer Luftfeder eines Autos zu erfassen, einen Lastausgleichsdruck auszugeben, wobei das lastabhängige Ventil umfasst:
ein Druckregelventil (50) zum Begrenzen eines von einer Luftquelle zugeführten Drucks auf einen Druck, der einem Lastausgleichsdruck unter einer Volllastbedingung entspricht, und Ausgeben des sich ergebenden Drucks;
einen Vorsteuerdrucksensor (52b) zum Erfassen des von dem Druckregelventil ausgegebenen Drucks;
ein Magnetventil (52), das fähig ist, einen Luftdruck zu laden/entladen, und das gemäß einem Erfassungswert von dem Vorsteuerdrucksensor betriebsfähig ist, um den von dem Druckregelventil (50) ausgegebenen Druck mit Hilfe des Ladens/Entladens einzustellen und den sich ergebenden Druck auszugeben; und
ein Ausgangsventil (51), das geeignet ist, eine Einspeisung des von dem Magnetventil (52) ausgegebenen Drucks als einen Vorsteuerdruck zu erhalten,
**dadurch gekennzeichnet, dass** das Ausgangsventil (51) eine Feder (51d) zur Sicherstellung einer Leerbedingung hat, um einen Lastausgleichsdruck unter einer Leerbedingung zu erzeugen, wobei das Ausgangsventil betriebsfähig ist, um einen Druck, der erhalten wird, indem der Vorsteuerdruck und der Lastausgleichsdruck unter einer Leerbedingung addiert werden, basierend auf einer Vorspannkraft der Feder (51d) zur Sicherstellung einer Leerbedingung als den Lastausgleichsdruck auszugeben.

2. Lastabhängiges Ventil nach Anspruch 1, wobei das Magnetventil betriebsfähig ist, wenn es in einem nicht mit Energie gespeisten Zustand ist, um das Druckregelventil und das Ausgangsventil abzusperren.

3. Lastabhängiges Ventil nach Anspruch 2, wobei das Druckregelventil und das Ausgangsventil integral in einem Block bereitgestellt sind.

4. Bremssteuerungsvorrichtung, die umfasst:
ein lastabhängiges Ventil nach einem der Ansprüche 1 bis 3; und
ein Servoventil, das ein Magnetventil umfasst, das geeignet ist, eine Einspeisung des Lastausgleichsdrucks zu erhalten, wobei das Servoventil betriebsfähig ist, um basierend auf einem Steuerdruck, der mit Hilfe des Luftdruckladens/Entladens des Magnetventils erzeugt wird, einen Bremsdruck zum Antreiben eines Bremszylinders auszugeben.

5. Bremssteuerungsvorrichtung nach Anspruch 4, die umfasst:
einen Gehäusekörper mit einem Aufnahmeraum, der fähig ist, das lastabhängige Ventil und das Servoventil unterzubringen, und einer Öffnung, die dem Aufnahmeraum zugewandt ist;
ein Deckelelement, das fähig ist, die Öffnung zu öffnen und zu schließen; und
einen Leitungssitz, der auf einer Oberfläche des Gehäusekörpers entgegengesetzt zu dem Deckelelement bereitgestellt ist,
wobei:
das lastabhängige Ventil eine hintere Oberfläche hat, die an dem Leitungssitz befestigbar ist;
das Druckregelventil hat: eine Feder zur Sicherstellung einer Vollastbedingung, um einen Ausgangsdruck davon auf einen Druck zu begrenzen, der dem Lastausgleichsdruck unter einer Vollastbedingung entspricht, und eine Einstellschraube für einen Vollastbedingungsdruck zum Einstellen einer Vorspannkraft der Feder zur Sicherstellung einer Volllastbedingung; und
das Ausgangsventil eine Einstellschraube für einen Leerbedingungsdruck zum Einstellen einer Vorspannkraft einer Feder zur Sicherstellung einer Leerbedingung hat,
und wobei die Einstellschraube für einen Vollastbedingungsdruck und die Einstellschraube für einen Leerbedingungsdruck jeweils in einer vorderen Oberfläche auf einer Seite entgegengesetzt zu der hinteren Oberfläche installiert sind.

6. Bremssteuerungsvorrichtung nach Anspruch 4, die eine Steuertafel umfasst, die fähig ist, das Magnetventil des lastabhängigen Ventils und das Magnetventil des Servoventils zu steuern, wobei die Steuertafel vor dem Servoventil und dem lastabhängigen Ventil installiert ist.

7. Bremssteuerungsvorrichtung nach Anspruch 6, die umfasst:
einen Gehäusekörper, der hat: einen Aufnahmeraum, der fähig ist, das lastabhängige Ventil und das Servoventil unterzubringen, und eine Öffnung, die dem Aufnahmeraum zugewandt ist; und
ein Deckelelement, das fähig ist, die Öffnung zu öffnen und zu schließen,
wobei die Steuertafel in einer Rückseite des Deckelelements installiert ist.

8. Bremssteuerungsvorrichtung nach Anspruch 7, wobei:
das Deckeleelement durch ein Gelenkelement in einer in einer Rechts-Links-Richtung zu öffnenden Weise mit dem Gehäusekörper verbunden ist;
ein Servoventil aus einem Paar der Servoventile besteht, die in einer derartigen Weise bereitgestellt sind, dass sie in einer horizontalen Richtung nebeneinander angeordnet sind; und
das lastabhängige Ventil in einem Raum gleich über oder unter einem der Servoventile auf der zu dem Gelenkelement entgegengesetzten Seite installiert ist,
wobei die Bremssteuerungsvorrichtung ein Durchführungselement umfasst, das einem Raum zugewandt ist, der durch das lastabhängige Ventil und die Servoventile auf der einen Seite des Gelenkelements definiert ist, um zuzulassen, dass eine elektrische Leitung hinein geführt wird.

9. Bremssteuerungsvorrichtung nach Anspruch 7, wobei die Steuertafel mit einer Anzeige versehen ist, die fähig ist, jeweilige Steuerzustände des lastabhängigen Ventils und des Servoventils anzuzeigen, wobei die Anzeige an der Steuertafel in einer Weise angebracht ist, dass sie sichtbar wird, wenn die Öffnung des Gehäusekörpers mittels des Deckelelements unverschlossen ist.

10. Bremssteuerungsvorrichtung nach Anspruch 7, die umfasst:
einen Verbinder, um zuzulassen, dass eine Signalleitung mit dem lastabhängigen Ventil oder dem Servoventil verbunden wird, um abnehmbar an der Steuertafel befestigt zu werden; und
ein Gelenkelement mit einem körperseitigen Abschnitt, der mit dem Gehäusekörper verbunden ist, und einem deckelseitigen Abschnitt, der in einer schwenkbaren Weise in Bezug auf den körperseitigen Abschnitt mit dem Deckelelement verbunden ist, wobei der körperseitige Abschnitt und der deckelseitige Abschnitt geeignet sind, voneinander trennbar zu sein.

11. Bremssteuerungsvorrichtung nach Anspruch 4, wobei das Magnetventil basierend auf einem normalen Bremsbefehl und einem Radschlupfzustand betriebsfähig ist, um den Lastausgleichsdruck einzustellen, und wobei das Servoventil umfasst:
eine Servoventileinheit, die geeignet ist, eine Einspeisung eines von dem Magnetventil eingestellten Drucks als einen Vorsteuerdruck aufzunehmen, und die betriebsfähig ist, um einen Bremsdruck auszugeben;
ein Entlastungsmagnetventil, das geeignet ist, basierend auf einem zwangsweisen Bremslösungsbefehl zwischen einer ersten Betriebsart und einer zweiten Betriebsart umzuschalten;
ein Zuführungsabsperrventil, das betriebsfähig ist, um einen Quelldruck in die Servoventileinheit einzuspeisen, wenn das Entlastungsmagnetventil in der ersten Betriebsart ist, und ansprechend auf das Umschalten des Entlastungsmagnetventils auf die zweite Betriebsart, die Einspeisung des Quelldrucks in das Entlastungsmagnetventil zu sperren; und
ein Auslassventil, das betriebsfähig ist, um den Bremsdruck von der Servoventileinheit auszugeben, wenn das Entlastungsmagnetventil in der ersten Betriebsart ist, und ansprechend auf das Umschalten des Entlastungsmagnetventils auf die zweite Betriebsart den Bremsdruck abzulassen.

12. Bremssteuerungsvorrichtung nach Anspruch 11, wobei die Servoventileinheit, die Zuführungsabsperrventileinheit und das Auslassventil integral in einem Block bereitgestellt sind, und wobei wenigstens ein Teil des Zuführungsabsperrventils und des Auslassventils jeweils innerhalb eines Bereichs auf einer radial einwärtigen Seite einer Membranplatte der Servoventileinheit angeordnet ist.

13. Bremssteuerungsvorrichtung nach Anspruch 11 oder 12, wobei das Servoventil betriebsfähig ist, um eine Bremskraft in einer stufenweisen Weise zu verringern, bis der Radschlupf nicht mehr erfasst wird.

14. Bremssteuerungsvorrichtung nach Anspruch 4, die für ein Auto konstruiert ist, das hat: einen Bremszylinder, eine Fluidzuführungsquelle, die eine Zuführungsquelle für ein Fluid ist, das an den Bremszylinder zugeführt werden soll, und eine Notbremsbefehlsleitung zum Herbeiführen einer Notbremsung, wobei das Magnetventil des Servoventils betriebsfähig ist, um einen Druck gemäß einem Signal, das einem normalen Bremsbefehl entspricht, um eine schwächere Bremsung als die Notbremsung herbeizuführen, und einem Signal, das von einem Radschlupferfassungsabschnitt zum Erfassen des Radschlupfs des Autos ausgegeben wird, auszugeben, und wobei das Servoventil umfasst:
eine Servoventileinheit, die geeignet ist, eine Einspeisung der Ausgabe von dem Magnetventil des Servoventils als einen Vorsteuerdruck aufzunehmen, und die betriebsfähig ist, um einen Bremsdruck zu erzeugen, der an den Bremszylinder zugeführt werden soll;
ein Auslassventil, das basierend auf einem in es eingespeisten Vorsteuerdruck betriebsfähig ist, um den Bremsdruck abzulassen;
einen Absperrabschnitt, der betriebsfähig ist, um ansprechend auf einen zwangsweisen Bremslösungsbefehl zum zwangsweisen Verringern eines Werts des Bremsdrucks einen Kontakt zu schließen;
ein Entlastungsmagnetventil, das geeignet ist, mit elektrischer Leistung von der Notbremsbefehlsleitung durch den Absperrabschnitt versorgt zu werden, um einen Vorsteuerdruck für das Auslassventil zu erzeugen.

15. Bremssteuerungsvorrichtung nach Anspruch 14, wobei das Auslassventil, wenn der Bremsdruck abgelassen wird, betriebsfähig ist, um den Bremsdruck in dem Bremszylinder und den Bremsdruck in dem Servoventil zusammen abzulassen.

## Revendications

1. Soupape à charge variable (21) capable d'émettre une pression de compensation de charge en fonction d'une valeur de détection provenant d'un capteur pouvant opérer pour détecter une pression d'une suspension pneumatique d'une voiture, la soupape à charge variable comprenant :
une soupape de régulation de pression (50) pour limiter une pression fournie depuis une source d'air à une pression correspondant à une pression de compensation de charge en condition de charge pleine et émettre la pression résultante ;
un capteur de pression pilote (52b) pour détecter la sortie de pression provenant de la soupape de régulation de pression ;
une électrovanne (52) capable de charger/décharger la pression d'air et pouvant opérer, en fonction d'une valeur de détection provenant du capteur de pression pilote, pour ajuster la sortie de pression provenant de la soupape de régulation de pression (50), au moyen du chargement/déchargement, et émettre la pression résultante ; et
une soupape de sortie (51) adaptée à recevoir une entrée de la sortie de pression provenant de l'électrovanne (52) en tant que pression pilote,
**caractérisée en ce que** la soupape de sortie (51) a un ressort de garantie de condition vide (51d) pour générer une pression de compensation de charge en condition vide, la soupape de sortie pouvant opérer pour émettre une pression obtenue en ajoutant la pression pilote et la pression de compensation de charge en condition vide en fonction d'une force d'inclinaison du ressort de garantie de condition vide en tant que pression de compensation de charge.

2. Soupape à charge variable selon la revendication 1, dans laquelle l'électrovanne peut opérer pour couper entre la soupape de régulation de pression et la soupape de sortie lorsqu'elle est dans un état non excité.

3. Soupape à charge variable selon la revendication 2, dans laquelle la soupape de régulation de pression et la soupape de sortie sont prévues intégralement en un bloc.

4. Dispositif de commande de frein comprenant :
la soupape à charge variable selon l'une quelconque des revendications 1 à 3 ; et
une soupape de relais incluant une électrovanne adaptée à recevoir une entrée de la pression de compensation de charge, la soupape de relais pouvant opérer, en fonction d'une pression de commande générée au moyen d'un chargement/déchargement à pression d'air de l'électrovanne, pour émettre une pression de freinage afin d'entraîner un cylindre de frein.

5. Dispositif de commande de frein selon la revendication 4, qui comprend :
un corps de carter ayant un espace de réception capable de loger la soupape à charge variable et la soupape de relais, et une ouverture faisant face à l'espace de réception ;
un élément de couvercle capable d'ouvrir et de fermer l'ouverture ; et
un siège de tuyau prévu sur une surface du corps de carter opposée à l'élément de couvercle, dans lequel :
la soupape à charge variable a une surface arrière pouvant être reliée au siège de tuyau ;
la soupape de régulation de pression inclut un ressort de garantie de condition de charge pleine pour limiter une pression de sortie provenant de celle-ci à une pression correspondant à la pression de compensation de charge en condition de charge pleine, et une vis d'ajustement de pression de condition de charge pleine pour ajuster une force d'inclinaison du ressort de garantie de condition de charge pleine ; et
la soupape de sortie inclut une vis d'ajustement de pression de condition vide pour ajuster une force d'inclinaison du ressort de garantie de condition vide,
et dans lequel chacune de la vis d'ajustement de pression de condition de charge pleine et de la vis d'ajustement de pression de condition vide est installée dans une surface avant sur un côté opposé à la surface arrière.

6. Dispositif de commande de frein selon la revendication 4, qui comprend un tableau de commande capable de commander l'électrovanne de la soupape à charge variable et l'électrovanne de la soupape de relais, le tableau de commande étant installé devant la soupape de relais et la soupape à charge variable.

7. Dispositif de commande de frein selon la revendication 6, qui comprend :
un corps de carter ayant un espace de réception capable de loger la soupape à charge variable et la soupape de relais, et une ouverture faisant face à l'espace de réception ; et
un élément de couvercle capable d'ouvrir et de fermer l'ouverture,
dans lequel le tableau de commande est installé à l'arrière de l'élément de couvercle.

8. Dispositif de commande de frein selon la revendication 7, dans lequel :
l'élément de couvercle est raccordé au corps de carter par un élément articulé de manière ouvrable dans une direction de la droite vers la gauche ;
la soupape de relais est constituée d'une paire de soupapes de relais prévues de telle sorte qu'elles sont agencées côte à côte dans une direction horizontale ; et
la soupape à charge variable est installée dans un espace juste au-dessus ou en dessous d'une des soupapes de relais sur un côté opposé à l'élément articulé,
dans lequel le dispositif de commande de frein comprend un élément d'entrée de courant qui fait face à un espace défini par la soupape à charge variable et les soupapes de relais sur le côté de l'élément articulé pour permettre à une ligne électrique d'être conduite en son sein.

9. Dispositif de commande de frein selon la revendication 7, dans lequel le tableau de commande est pourvu d'un indicateur capable d'indiquer des états de commande respectifs de la soupape à charge variable et de la soupape de relais, l'indicateur étant relié au tableau de commande de manière à devenir visible lorsque l'ouverture du corps de carter est dévoilée au moyen de l'élément de couvercle.

10. Dispositif de commande de frein selon la revendication 7, qui comprend :
un connecteur pour permettre à une ligne de signaux connectée à la soupape à charge variable ou à la soupape de relais d'être reliée de manière amovible au tableau de commande ; et
un élément articulé ayant une portion côté corps raccordée au corps de carter et une portion côté couvercle raccordée à l'élément de couvercle de manière à pouvoir basculer par rapport à la portion côté corps, la portion côté corps et la portion côté couvercle étant adaptées à être séparables l'une de l'autre.

11. Dispositif de commande de frein selon la revendication 4, dans lequel l'électrovanne de la soupape de relais peut opérer, en fonction d'une commande de freinage normale et d'un état de patinage de roue, pour ajuster la pression de compensation de charge, et dans lequel la soupape de relais inclut :
un module de soupape de relais adapté à recevoir une entrée d'une pression ajustée par l'électrovanne en tant que pression pilote et pouvant opérer pour émettre une pression de freinage ;
une électrovanne de libération adaptée à pouvoir être commutée entre un premier mode et un second mode en fonction d'une commande de libération de frein contraignante ;
une soupape de coupure d'alimentation pouvant opérer, lorsque l'électrovanne de libération est dans le premier mode, pour entrer une pression source dans le module de soupape de relais, et, en réponse à la commutation de l'électrovanne de libération vers le second mode, pour couper la pression source devant être entrée dans le module de soupape de relais ; et
une soupape d'évacuation pouvant opérer, lorsque l'électrovanne de libération est dans le premier mode, pour émettre la pression de freinage depuis le module de soupape de relais, et, en réponse à la commutation de l'électrovanne de libération vers le second mode, pour évacuer la pression de freinage.

12. Dispositif de commande de frein selon la revendication 11, dans lequel le module de soupape de relais, la soupape de coupure d'alimentation et la soupape d'évacuation sont prévues intégralement en un bloc, et dans lequel au moins une partie de chacune de la soupape de coupure d'alimentation et de la soupape d'évacuation est située à l'intérieur d'une zone sur un côté radialement vers l'intérieur d'une plaque de membrane du module de soupape de relais.

13. Dispositif de commande de frein selon la revendication 11 ou 12, dans lequel la soupape de relais peut opérer pour réduire une force de freinage de manière progressive jusqu'à ce que le patinage de roue devienne indécelable.

14. Dispositif de commande de frein selon la revendication 4, qui est conçu pour une voiture qui a un cylindre de frein, une source d'alimentation en fluide qui est une source d'alimentation pour un fluide devant être fourni au cylindre de frein et une ligne de commande de freinage d'urgence pour effectuer un freinage d'urgence, dans lequel l'électrovanne de la soupape de relais peut opérer pour émettre une pression en fonction d'un signal correspondant à une commande de freinage normale pour effectuer un freinage plus faible que le freinage d'urgence, et un signal émis depuis une section de détection de patinage de roue pour détecter un patinage de roue de la voiture, et dans lequel la soupape de relais inclut :
un module de soupape de relais adapté à recevoir une entrée de la sortie provenant de l'électrovanne de la soupape de relais en tant que pression pilote et pouvant opérer pour générer une pression de freinage devant être fournie au cylindre de frein ;
une soupape d'évacuation pouvant opérer en fonction d'une entrée de pression pilote dans celle-ci pour évacuer la pression de freinage ;
une section de vanne pouvant opérer pour fermer un contact en réponse à une commande de libération de frein contraignante pour réduire de manière contraignante une valeur de la pression de freinage ;
une électrovanne de libération adaptée à être alimentée en puissance électrique depuis la ligne de commande de freinage d'urgence par la section de vanne de manière à générer une pression pilote pour la soupape d'évacuation.

15. Dispositif de commande de frein selon la revendication 14, dans lequel la soupape d'évacuation peut opérer, lors du déchargement de la pression de freinage, pour décharger la pression de freinage dans le cylindre de frein et la pression de freinage dans la soupape de relais globalement.
